# EUROPEAN PATENT APPLICATION

(11) **EP 4 417 419 A1**
(43) Date of publication of application: **21.08.2024**
(21) Application number: 22880997.6
(22) Date of filing: 11.10.2022
(51) Int. Cl.: B32B 27/32, B32B 27/00, B65D 65/40

(54) **SEALANT FILM FOR RETORT FOOD PACKAGING CONTAINER**

(30) Priority: 15.10.2021 JP 2021169893; 15.10.2021 JP 2021169894
(71) Applicant: RM TOHCELLO CO., LTD., Tokyo 1018485 (JP)
(72) Inventor: YAMAMOTO, Keiichi, Koga-shi, Ibaraki 306-0213 (JP); MATSUO, Hiroshi, Koga-shi, Ibaraki 306-0213 (JP)
(74) Representative: J A Kemp LLP
(86) International application number: PCT/JP2022/037842
(87) International publication number: WO 2023/063302

(57) **Abstract**

To provide a sealant film for retort food packaging containers in which heat resistance at retort temperatures is balanced with impact resistance at low temperatures, or a wide processable temperature range is balanced with impact resistance at low temperatures, at a high level beyond the limits of conventional technologies. The object is accomplished by a sealant film for retort food packaging containers having a seal layer, a core layer, and a laminate layer, each comprising a linear polyethylene, wherein each of said layers has a specific density and/or is polymerized by a specific catalyst, or wherein each of said layers has a specific thermal melting rate at 121°C.

## Description

### TECHNICAL FIELD

This first invention of the present application relates to a sealant film for retort food packaging containers, and more specifically to a sealant film for retort food packaging containers in which retortability (heat resistance at retort temperatures) and impact resistance at low temperatures are balanced at a high level.

This second invention of the present application relates to a sealant film for retort food packaging containers, and more specifically to a sealant film for retort food packaging containers in which a wide processable temperature range and impact resistance at low temperatures are balanced at a high level.

### BACKGROUND ART

In the field of packaging containers for retort foods, where demand has been further increasing in recent years, there is a growing need for retort food packaging containers suitable not only for storage and distribution at room temperature, but also for storage and distribution at low temperatures (frozen or chilled). Therefore, sealant films for such retort food packaging containers are required to have impact resistance at low temperatures, in addition to heat sealability and heat resistance at high temperatures, which have been conventionally required.

To achieve both low-temperature impact resistance and high-temperature heat resistance and so on, a sealant film for retort food consisting of a laminate comprising at least a first layer, a second layer, and a third layer, in this order, characterized in that the first layer comprises a specific ethylene/alpha-olefin copolymer, the second layer comprises a specific ethylene/alpha-olefin copolymer, and the third layer contains a specific ethylene/alpha-olefin copolymer and a high density polyethylene, has been proposed (see, for example, Patent Literature 1).

As a laminate suitable for films and sheets for packaging prepared foods, etc., also having both impact resistance and heat resistance, a laminate characterized by comprising at least two layers of: a first layer comprising (A) linear low-density polyethylene consisting of a copolymer of ethylene and 3 to 20-carbon alpha-olefin and (B) high density polyethylene consisting of a homopolymer of ethylene or a copolymer of ethylene and 3 to 20-carbon alpha olefin; and a second layer comprising (C) high density polyethylene, which is a homopolymer of ethylene or a copolymer of ethylene and a 3-20 carbon alpha-olefin and was produced with a metallocene catalyst or a single-site catalyst, has been proposed (see, for example, Patent Literature 2).

In recent years, demands for retortability (heat resistance at retort temperatures) have been increasing, and from this perspective, there is a need for sealant films for retort food packaging containers in which heat resistance at retort temperatures and impact resistance at low temperatures are balanced at a high level. For example, there is a need for a sealant film for retort food packaging containers that prevents heat fusion between the innermost layers (seal layers) of the packaging container for a long period of time even at retort processing temperatures and that does not easily break even after repeated drop tests at low temperatures after the packaging container is formed.

Furthermore, while heat sealability, heat resistance at high-temperatures and so on have long been required for retort food packaging containers as mentioned above, it has been increasingly important, especially from the view point of flexibilities in the retort treatment process and foods to be packaged, that temperature range in which the packaging container can be easily opened without significant deformation after the retort processing is carried out at the retort temperature (processable temperature) be a wide. From this viewpoint, there is a growing demand for sealant films for retort food packaging containers in which a wide range of processable temperature and impact resistance at low temperatures are balanced at a high level. For example, there has been a demand for sealant films for retort food packaging containers that has a wide temperature range in which the packaging container can be easily opened without significant deformation after the retort processing is carried out at the retort temperature after forming a packaging container in such a manner that the seal layers are in contact with each other (processable temperature) and that does not easily break even after drop tests thereon at a low temperature are repeated after the packaging container is formed.

### Prior Art Documents

### Patent Documents

Patent Document 1: JP 2019-131271 A
Patent Document 2: JP 2002-361811 A

### SUMMARY OF THE INVENTION

### OBJECT OF THE INVENTION

In view of the above technical background, the object of the first invention of the present application is to provide a sealant film for retort food packaging containers in which heat resistance at retort temperatures and impact resistance at low temperatures are balanced at a high level beyond the limits of the conventional technology.

In view of the above technical background, the object of the second invention of the present application is to provide a sealant film for retort food packaging containers in which a wide processable temperature range and impact resistance at low temperatures are balanced at a high level beyond the limits of the conventional technology.

### SOLUTION TO PROBLEM

As a result of intensive investigation, the inventors have found that, in a sealant film for retort food packaging containers having (1A) seal layer, (1B) core layer, and (1C) laminate layer, each comprising a linear polyethylene, by virtue of setting the density of each layer within a specific range and using linear polyethylene polymerized by using a metallocene catalyst in each of (1B) core layer and (1C) laminate layer, heat resistance at retort temperatures and impact resistance at low temperatures can be balanced at a high level beyond the limits of the conventional technology, leading to the completion of the first invention of the present application.

In other words, the first invention of the present application is:
[1] A sealant film for retort food packaging containers having (1A) seal layer, (1B) core layer, and (1C) laminate layer, each comprising a linear polyethylene, wherein
   the density of (1A) seal layer is 915 kg/m³ or higher and 960 kg/m³ or lower;
   the densities of (1B) core layer and (1C) laminate layer are both 932 kg/m³ or higher and lower than 940 kg/m³; and
   the linear polyethylenes constituting (1B) core layer and (1C) laminate layer are both polymerized using a metallocene catalyst.

The following [2] to [5] each are a preferred aspect or embodiment of the first invention of the present application.
[2] The sealant film for retort food packaging containers according to [1], wherein the melt flow rate (190°C, 2160g load) of (1B) core layer and (1C) laminate layer are both 6.0 g/10 min or less.
[3] The Sealant film for retort food packaging containers according to [1] or [2], wherein the density of (1A) seal layer is 940 kg/m³ or higher and 953 kg/m³ or lower.
[4] A film for retort food packaging containers, comprising the sealant film for retort food packaging containers according to any one of [1] to [3] and a base film, wherein the base film is laminated with the sealant film for retort food packaging containers at (1C) laminate layer.
[5] A retort food packaging container comprising the film for retort food packaging containers according to [4].

As a result of intensive investigation, the inventors have found that, in a sealant film for retort food packaging containers having (2A) seal layer, (2B) core layer, and (2C) laminate layer, each comprising a linear polyethylene, by virtue of setting the thermal melting rate at a specific temperature of each layer within a specific range, a wide processable temperature range and impact resistance at low temperatures can be balanced at a high level beyond the limits of the conventional technology, leading to the completion of the second invention of the present application.

In other words, the second invention of the present application is:
[6] A sealant films for retort food packaging containers having (2A) seal layer, (2B) core layer, and (2C) laminate layer, each comprising a linear polyethylene, wherein
(2B) core layer and (2C) laminate layer each have a thermal melting rate at 121°C of 30 to 95 mass%; and
(2A) seal layer has a thermal melting rate at 121°C of 5 to 50 mass%.

The following [7] to [10] each are a preferred aspect or embodiment of the second invention of the present application.
[7] The sealant film for retort food packaging containers according to [6], wherein the thermal melting rate at 121°C of (2A) seal layer is 5 to 35 mass%.
[8] The sealant film for retort food packaging containers according to [6] or [7], wherein the linear polyethylenes constituting (2B) core layer and (2C) laminate layer are both polymerized using a metallocene catalyst.
[9] A film for retort food packaging containers, comprising the sealant film for retort food packaging containers according to any one of [6] to [8] and a base film, wherein the base film is laminated with the sealant film for retort food packaging containers at (2C) laminate layer.
[10] A retort food packaging container comprising the film for retort food packaging containers according to [9].

### ADVANTAGEOUS EFFECTS OF THE INVENTION

The sealant film for retort food packaging containers of the first invention of the present application can balance heat resistance at retort temperatures and impact resistance at low temperatures at a high level beyond the limits of the conventional technology, and provides remarkable technical effects, for example, that heat fusion between the innermost layers (seal layers) of the packaging container is suppressed for a long period of time, even at a retort processing temperature; that the packaging container is not easily broken even if it is repeatedly dropped at a low temperature after being formed; and so on.

The sealant film for retort food packaging containers of the second invention of the present application can balance a wide processable temperature range and impact resistance at low temperatures at a high level beyond the limits of the conventional technology, and provides remarkable technical effects, for example, that; temperature range in which the packaging container can be easily opened without significant deformation after the retort processing is carried out at the retort temperature after forming the packaging container in such a manner that the seal layers are in contact with each other (processable temperature) is wide; that the packaging container is not easily broken even if drop tests thereon at a low temperature are repeated after the packaging container is formed; and so on.

### DESCRIPTION OF EMBODIMENTS

Embodiments for carrying out the first invention of the present application are concretely described as follows.

The first invention of the present application is a sealant film for retort food packaging containers having (1A) seal layer, (1B) core layer, and (1C) laminate layer, each comprising a linear polyethylene, wherein
the density of (1A) seal layer is 915 kg/m³ or higher and 960 kg/m³ or lower;
the densities of (1B) core layer and (1C) laminate layer are both 932 kg/m³ or higher and lower than 940 kg/m³; and
the linear polyethylenes constituting (1b) core layer and (1c) laminate layer are both polymerized using a metallocene catalyst.

Accordingly, the sealant film for retort food packaging containers of the first invention of the present application has (1A) seal layer, (1B) core layer, and (1C) laminate layer.

### Seal layer (1A)

Seal layer (1A) that constitutes the sealant film for retort food packaging containers of the first invention of the present application comprises a linear polyethylene. Therefore, seal layer (1A) may consist only of a linear polyethylene, or may contain, in addition to a linear polyethylene, other components, such as other resins and various additives, such as an anti-blocking agent and a slipping agent.

By containing a linear polyethylene in seal layer (1A), the sealant film for retort food packaging containers of the first invention of the present application can balance retortability (heat resistance at retort temperatures) and impact resistance at low temperatures at a high level, as well as physical properties required for sealant films in general, such as heat sealability, softness, flexibility and airtightness.

The density of seal layer (1A) is 915 kg/m³ or higher and 960 kg/m³ or lower. By virtue of the density of 915 kg/m³ or higher and 960 kg/m³ or lower of seal layer (1A), together with the other requirements of the first invention, the sealant film for food packaging containers of the first invention of the present application can balance retortability (heat resistance at retort temperatures) and impact resistance at low temperatures at a high level.

The density of seal layer (1A) is preferably 930 kg/m³ or higher and 955 kg/m³ or lower, and particularly preferably 940 kg/m³ or higher and 953 kg/m³ or lower.

The density of seal layer (1A) can be adjusted accordingly by adjusting type(s) and amount(s) of material(s) constituting seal layer (1A) or manufacturing conditions of seal layer (1A) or the sealant film for retort food packaging containers of the first invention of the present application, which comprises seal layer (1A).

If seal layer (1A) consists only of a linear polyethylene, or only of a linear polyethylene and a small amount of additives, the density of seal layer (1A) is almost determined by the density of the linear polyethylene, and in such a case, the density of seal layer (1A) can be kept in the specified range by using a linear polyethylene having a density of 915 kg/m³ or higher and 960 kg/m³ or lower, preferably 930 kg/m³ or higher and 955 kg/m³ or lower, and more preferably 940 kg/m³ or higher and 953 kg/m³ or lower.

There is no particular limit on the melting point of seal layer (1A), and it can be set as appropriate according to the application and form of use of the sealant film for retort food packaging containers and is preferably 120 to 135°C.

By virtue of the melting point of seal layer (1A) falling within the above range, the sealant film for food packaging containers of the first invention of the present application can have even better retortability (heat resistance at retort temperatures).

The melting point of seal layer (1A) is more preferably 122°C to 134°C, and especially preferably 125°C to 133°C.

The melting point of seal layer (1A) can be adjusted as appropriate by adjusting type(s) and amount(s) of material(s) constituting seal layer (1A) or manufacturing condition(s) of seal layer (1A) or the sealant film for retort food packaging containers of the first invention of the present application, which comprises seal layer (1A).

If seal layer (1A) consists only of a linear polyethylene, or only of a linear polyethylene and a small amount of additives, the melting point of seal layer (1A) is almost determined by the melting point of the linear polyethylene, and in such a case, the melting point of the seal layer (1A) can be set within the above preferred range by using a linear polyethylene having a melting point of 120 to 135°C, preferably 125 to 133°C.

Seal layer (1A) preferably has a melting rate at retort temperature, such as 121°C, of 45 mass% or less.

By virtue of the melting rate of seal layer (1A) at the retort temperature falling within the above range, the sealant film for retort food packaging containers of the first invention of the present application can have even better retortability (heat resistance at retort temperatures).

The melting rate of seal layer (1A) at 121°C is more preferably 40 mass% or less, and especially preferably 35 mass% or less.

The melting rate of seal layer (1A) at retort temperature can be adjusted as appropriate by adjusting type(s) and amount(s) of material(s) constituting seal layer (1A) or manufacturing conditions of seal layer (1A) or the sealant film for retort food packaging containers of the first invention of the present application, which comprises seal layer (1A).

There is no particular limit on the MFR (melt flow rate) of seal layer (1A), and it can be set as appropriate according to the manufacturing conditions of the seal layer (1A) or sealant film for retort food packaging containers, which comprises seal layer (1A), and physical properties required for a sealant film for retort food packaging containers. An MFR (1 90°C, 2160g load) of 0.1 to 15g/10min is preferred.

By virtue of having MFR of seal layer (1A) falling within the above range, favorable effects, such as that the production of the sealant film for food packaging containers of the first invention of the present application becomes easier and that the resin pressure during extrusion is within an appropriate range, can be achieved.

The MFR (190°C, 2160 g load) of seal layer (1A) is more preferably 0.5 to 12 g/10 min, and 0.7 to 11 g/10 min is especially preferred.

The MFR of seal layer (1A) can be adjusted as appropriate by selecting or adjusting type(s) and amount(s) of material(s) constituting seal layer (1A).

If seal layer (1A) consists only of a linear polyethylene, or only of a linear polyethylene and a small amount of additives, the MFR of seal layer (1A) is almost determined by the MFR of the linear polyethylene, and in such a case, a linear polyethylene having an MFR (190°C, 2160 g load) of 0.1 to 15 g/10 min, preferably 0.5 to 12 g/10 min, can be used to set the MFR of seal layer (1A) to fall within the above desirable range.

### Linear polyethylene

The linear polyethylene that constitutes seal layer (1A) is only required to be a homopolymer of ethylene or a copolymer of ethylene and other monomer(s) having a main chain that is substantially linear, and no other limitations exist. High-density polyethylenes and linear low-density polyethylenes are typical forms of the linear polyethylene.

In seal layer (1A), a linear polyethylene that allows the density of seal layer (1A) to be between 915 kg/m³ and 960 kg/m³ is used.

The linear polyethylene content of seal layer (1A) is preferably 20% by mass or higher, 25 to 100% by mass is more preferable, and 30 to 100% by mass is especially preferable.

In seal layer (1A), only one species of linear polyethylene may be used, or a combination of two or more species of linear polyethylenes may be used. In the case of using a combination of two or more species of linear polyethylenes, the linear polyethylene content mentioned above shall be calculated based on the sum of the masses of said two or more species of linear polyethylenes.

### High-density polyethylene

As high-density polyethylene, which is a typical embodiment of the linear polyethylene, those generally known as a high-density polyethylene in the art can be used as appropriate.

High-density polyethylene (HDPE) may be a homopolymer of ethylene or a copolymer of ethylene and α-olefin(s).

The above high-density polyethylene preferably has a melt flow rate (hereinafter referred to as "MFR") of 0.1 to 15 g/10 min, more preferably 0.5 to 12.0 g/10 min, and further preferably 0.7 to 11.0 g/10 min, measured at 190°C and 2160 g load in accordance with JIS K6922-1.

MFR in the above range is desirable because it lowers the load of the extruder during the molding process and improves molding stability.

The high-density polyethylene preferably used in this embodiment preferably has a density of 940 to 975 kg/m³ according to JIS K6922-1, more preferably 945 to 965 kg/m³, and even more preferably 950 to 960 kg/m³.

With the density in the above range, it is easy to make the density of seal layer (1A) be 915 kg/m³ or higher and 960 kg/m³ or lower.

The high-density polyethylene preferably used in this embodiment may be commercially available ones, such as Nipolon Hard 5700, 8500, and 8022 (trade names) manufactured by Tosoh Corporation, and Hizex (registered trademark) 3300F manufactured by Prime Polymer Co., Ltd.

The high-density polyethylene preferably used in this embodiment can be produced by manufacturing methods, such as slurry, solution, and vapor phase methods. In the production of the high-density polyethylene in general, a Ziegler catalyst consisting of solid catalyst components comprising magnesium and titanium and an organic aluminum compound; a metallocene catalyst consisting of an organic transition metal compound comprising a cyclopentadienyl derivative and a compound that reacts therewith to form an ionic complex and/or an organometallic compound; a vanadium-based catalyst; and so on can be used, and the production can be carried out by homopolymerizing ethylene or copolymerizing ethylene and α-olefin(s) using such a catalyst. As the α-olefin(s), those generally referred to as an α-olefin can be used, and α-olefins having 3 to 12 carbon atoms, such as propylene, butene-1, hexene-1, octene-1, 4-methyl-1-pentene and so on, are preferable. Examples of the copolymer of ethylene and α-olefin(s) include ethylene/hexene-1 copolymer, ethylene/butene-1 copolymer, ethylene/octene-1 copolymer and so on.

### Linear low-density polyethylene

As a linear low-density polyethylene, which is a typical embodiment of the linear polyethylene, those generally known as a linear low-density polyethylene in the technical field can be used as appropriate. Copolymers of ethylene and α-olefin(s) can be used as such a linear low-density polyethylene, and those synthesized by a production method using a known catalyst, such as a Ziegler catalyst or a metallocene catalyst, can be used.

Compounds having 3 to 20 carbons can be used as the alpha-olefin(s), and examples thereof include propylene, 1-butene, 1-pentene, 1-hexene, 1-heptene 1-octene, 1-nonene, 1-decene, 1-dodecene, 4-methyl-1-pentene, 4-methyl-1-hexene, etc., and mixtures thereof can also be used. The alpha-olefin(s) is preferably a compound having 4, 6 or 8 carbons, such as 1-butene, 1-hexene, 1-octene, or mixtures thereof.

Nevertheless, it is also possible to multimerize ethylene to produce α-olefin(s) in the polymerization process, in which case the product can be made essentially only from ethylene.

The linear low-density polyethylene may be commercially available ones, for example, 2040F (C₆-LLDPE, MFR: 4.0, density: 0.918 g/cm³) made by Ube Maruzen Polyethylene Corporation, Evolue (registered trademark) SP 2040 made by Prime Polymer Co., Ltd. can be used.

The density of the linear low density polyethylene is preferably 890 to 940 kg/m³, and more preferably 900 to 930 kg/m³. From the viewpoint of making the density of seal layer (1A) be 915 kg/m³ or higher and 960 kg/m³ or lower and/or making it be in a further preferred density range, it is particularly preferred to use those having a relatively high density in the above density range. In addition, it is preferable to set the formulation amount of those having a relatively low-density at a small amount.

The density of linear low-density polyethylene can be adjusted as appropriate by adjusting the comonomer content, and also by selecting and adjusting polymerization conditions, such as the catalyst and the polymerization temperature.

From the viewpoint of making the MFR (190°C, 2160 g load) of seal layer (1A) be in the above preferred range, the MFR (190°C, 2160 g load) of the linear low density polyethylene is preferably 0.1 to 15 g/10 min, more preferably 0.5 to 12 g/10 min, and particularly preferably 0.7 to 11 g/10min.

The MFR (190°C, 2160g load) of the linear low-density polyethylene can be adjusted as appropriate in accordance with conventionally known methods, and can be adjusted by adjusting polymerization conditions, such as the polymerization temperature, or by introducing a molecular weight modifier.

Linear low-density polyethylene can be produced by conventionally known production methods using conventionally known catalysts, including multi-site catalysts, such as Ziegler catalysts, and single-site catalysts, such as metallocene catalysts. From the viewpoint of obtaining a linear low-density polyethylene that has a narrow molecular weight distribution and can form high-strength films, it is preferable to use a single-site catalyst.

The above single-site catalysts are catalysts that can form uniform active species and are usually prepared by contacting a metallocene or non-metallocene transition metal compound with an activating cocatalyst. Single-site catalysts are preferred over multi-site catalysts because they have a more homogeneous active site structure, which allows polymerization of polymers with high molecular weight and a highly uniform structure. As the single-site catalyst, metallocene catalysts are particularly preferably used. A metallocene catalyst is a catalyst comprising catalytic components of a transition metal compound of Group IV of the Periodic Table containing a ligand having a cyclopentadienyl skeleton, a cocatalyst; an organometallic compound as necessary; and a support.

In the above transition metal compound of Group IV of the Periodic Table containing a ligand having a cyclopentadienyl skeleton, the cyclopentadienyl skeleton is a cyclopentadienyl group, a substituted cyclopentadienyl group, etc. The substituted cyclopentadienyl group is one having at least one substituent selected from a hydrocarbon group having 1 to 30 carbons, a silyl group, a silyl substituted alkyl group, a silyl substituted aryl group, a cyano group, a cyanoalkyl group, a cyanoaryl group, a halogen group, a haloalkyl group, a halosilyl group, etc. The substituted cyclopentadienyl group may have two or more substituents, and the substituents may be bonded to each other to form a ring, such as an indenyl ring, a fluorenyl ring, an azulenyl ring, or a hydrogenated form thereof. The rings formed by substituents bonded to each other may further have a substituent.

In the transition metal compounds of Group IV of the Periodic Table containing a ligand having a cyclopentadienyl skeleton, examples of the transition metal include zirconium, titanium, hafnium, etc., and zirconium and hafnium are particularly preferred. The transition metal compound usually has two ligands having a cyclopentadienyl skeleton, and each ligand having a cyclopentadienyl skeleton is preferably connected to each other by a bridging group. Examples of the bridging group include alkylene groups with 1 to 4 carbons, silylene groups, substituted silylene groups, such as dialkylsilylene groups and diarylsilylene groups, and substituted germylene groups, such as dialkylgermylene groups and diarylgermylene groups, and substituted silylene groups are preferable.

In the transition metal compound of Group IV of the Periodic Table, ligands other than those having a cyclopentadienyl skeleton include, as typical ones, hydrogen, hydrocarbon groups (alkyl groups, alkenyl groups, aryl groups, alkylaryl groups, aralkylaryl groups, polyenyl groups, etc.) with 1 to 20 carbon atoms, halogens, meta-alkyl groups, meta-aryl groups, etc.

One species or a mixture of two or more of the above transition metal compounds of Group IV of the Periodic Table containing a ligand having a cyclopentadienyl skeleton can be used as a catalyst component.

Cocatalysts are those that can render the above-mentioned transition metal compounds of Group IV of the Periodic Table effective as a polymerization catalyst or can equalize the ionic charge in catalytically activated state. Examples of the cocatalyst include benzene-soluble aluminoxanes of organoaluminum oxy compounds, benzene-insoluble organoaluminum oxy compounds, ion-exchangeable layered silicates, boron compounds, ionic compounds consisting of cations with or without active hydrogen groups and non-coordinating anions, lanthanide salts, such as lanthanum oxide, tin oxide, phenoxy compounds containing fluorine groups, etc.

Transition metal compounds of Group IV of the Periodic Table containing a ligand having a cyclopentadienyl skeleton may be used being supported on an inorganic or organic compound carrier. Porous oxides of inorganic or organic compounds are preferred as the carrier. Concrete examples thereof include ion-exchangeable layered silicates, SiO₂, Al₂O₃, MgO, ZrO₂, TiO₂, B₂O₃, CaO, ZnO, BaO, ThO₂ etc. and mixtures thereof.

Further, organometallic compounds used as necessary include organoaluminum compounds, organomagnesium compounds, and organozinc compounds. Of these, organoaluminum is preferably used.

From the viewpoint of obtaining linear low-density polyethylene with wide molecular weight distribution and excellent flexibility and moldability, it is preferable to use a multi-site catalyst, such as a Ziegler catalyst and a Phillips catalyst.

Preferred Ziegler catalysts can be those generally known as Ziegler catalysts for the coordination polymerization of ethylene and α-olefins, such as catalysts containing a titanium compound and an organoaluminum compound, and examples thereof include catalysts consisting of a titanium halide compound and an organoaluminum compound, and catalysts consisting of a solid catalyst component consisting of titanium, magnesium, chlorine and so on and an organoaluminum compound. More specific examples of such catalysts include: catalysts consisting of (a) a catalytic component obtained by reacting a titanium compound with a reaction product of an anhydrous magnesium dihalide pretreated with an alcohol and an organometallic compound (b) an organometallic compound; catalysts consisting of (A) a catalytic component obtained by reacting magnesium metal and an organic hydroxide compound or an oxygen-containing organic compound of magnesium or the like, an oxygen-containing organic compound of a transition metal, and an aluminum halide compound and (B) a catalyst component of an organometallic compound; and catalysts consisting of (A) solid catalyst component obtained by reacting (i) at least one selected from selected from magnesium metal and an organic hydroxide compound, and an oxygen-containing organic compound of magnesium and a halogen-containing compound of magnesium, (ii) at least one selected from an oxygen-containing organic compound of a transition metal and a halogen -containing organic compound of a transition metal, (iii) a reaction product obtained by reacting a silicon compound, and (iv) an aluminum halide compound and (B) a catalyst component of an organometallic compound.

The Phillips catalyst can be those generally known as a Phillips catalyst for the coordination polymerization of ethylene and α-olefin, which can be a catalyst system containing a chromium compound, such as chromium oxide, etc., and concrete examples thereof include catalysts in which a chromium compound, such as chromium trioxide, a chromate ester, etc., is supported on a solid oxide, such as silica, alumina, silica-alumina and silica-titania.

Seal layer (1A) may contain components other than the linear polyethylene described above, such as polymers other than the linear polyethylene, oligomers, anti-blocking agents, slip agents, heat stabilizers (antioxidants), weather stabilizers, UV absorbers, lubricants, nuclear agents, antistatic agents, antifogging agents, pigments, and dyes. In addition, various fillers, such as talc, silica, diatomaceous earth, etc., can be blended as needed or to the extent not contrary to the object of the first invention of the present application.

These additives may be pre-blended into linear polyethylene or added when forming seal layer (1A) from a linear polyethylene.

While there is no particular limit on the thickness of seal layer (1A), from the viewpoint of good sealing characteristics, etc., it is preferable that the thickness be 3 µm or greater, 4 µm or greater is more preferable, and 5 µm or greater is especially preferable.

On the other hand, from the viewpoint of flexibility and economic efficiency, the thickness of seal layer (1A) is preferably 30 µm or less, more preferably 25 µm or less, and especially preferably 20 µm or less.

If stretching is performed in the production of the laminate film in the first invention of the present application, it is preferable that the stretching ratio be 1 to 100 times in terms of area ratio, and it is especially preferable that it be 4 to 80 times. The thickness of the layer corresponding to seal layer (1A) before stretching is preferably 0.3 to 12 mm, and 0.5 to 4 mm is particularly preferable.

The thickness of seal layer (1A) can be adjusted by adjusting the stretching conditions, such as stretching ratio, the thickness of the layer before stretching, and the lip spacing of the die used to form the layer before said stretching.

### Core layer (1B)

Core layer (1B) that constitutes the sealant film for retort food packaging containers of the first invention of the present application comprises a linear polyethylene polymerized using a metallocene catalyst. Accordingly, core layer (1B) may consist only of a linear polyethylene polymerized using a metallocene catalyst, or it may contain, in addition to a linear polyethylene polymerized using a metallocene catalyst, other components, such as other resin(s) and various additive(s), such as anti-blocking agent and slipping agent.

By containing a linear polyethylene polymerized using a metallocene catalyst in core layer (1B), the sealant film for retort food packaging containers of the first invention of the present application can balance retortability (heat resistance at retort temperatures) and impact resistance at low temperatures at a high level. It can also provide physical properties required for sealant films in general, such as heat sealability, softness, flexibility, and airtightness.

The density of core layer (1B) is 932 kg/m³ or higher and lower than 940 kg/m³. The density of core layer (1B) of 940 kg/m³ or higher and 960 kg/m³ or lower, together with the other requirements of the first invention of the present application, allows the sealant film for food packaging containers of the first invention to balance retortability (heat resistance at retort temperatures) and impact resistance at low temperatures at a high level.

The density of core layer (1B) is preferably 934 kg/m³ or higher and lower than 940 kg/m³, and particularly preferably 936 kg/m³ or higher and lower than940 kg/m³.

The density of core layer (1B) can be adjusted appropriately by adjusting the type(s) and the amount(s) of material(s) constituting core layer (1B) or manufacturing conditions of core layer (1B) or the sealant film for retort food packaging containers of the first invention of the present application, which comprises core layer (1B).

If core layer (1B) consists only of a linear polyethylene, or only of a linear polyethylene and a small amount of additives, the density of core layer (1B) is almost determined by the density of the linear polyethylene, and in such a case, the density of core layer (1B) can be kept in the specified range by using a linear polyethylene having a density of 932 kg/m³ or higher and lower than 940 kg/m³, preferably 934 kg/m³ or higher and lower than 940 kg/m³.

There is no particular limit on the melting point of core layer (1B), and it can be set as appropriate according to the application and form of use of the sealant film for retort food packaging containers and is preferably 120 to 135°C.

By virtue of the melting point of core layer (1B) falling within the above range, the sealant film for food packaging containers of the first invention of the present application can be given even better retortability (heat resistance at retort temperatures).

The melting point of core layer (1B) is more preferably 122 to 134°C, and especially preferably 125 to 133°C.

The melting point of the core layer (1B) can be adjusted as appropriate by adjusting type(s) and amount(s) of material(s) constituting core layer (1B) or manufacturing condition(s) of core layer (1B) or the sealant film for retort food packaging containers of the first invention of the present application, which comprises the core layer (1B).

If core layer (1B) consists only of a linear polyethylene, or only of a linear polyethylene and a small amount of additives, the melting point of core layer (1B) is almost determined by the melting point of the linear polyethylene, and in such a case, the melting point of core layer (1B) can be set within the above preferred range by using a linear polyethylene having a melting point of 120 to 135°C, preferably 122 to 134°C.

Core layer (1B) preferably has a melting rate at a retort temperature, e.g., a melting rate at 121°C, of 95 mass% or less.

The melting rate at a retort temperature of the core layer (1B) falling within the above range gives the sealant film for food packaging containers of the first invention of the present application even better retortability (heat resistance at retort temperatures).

The melting rate at 121°C of core layer (1B) is more preferably from 45 to 95 mass%, and from 47 to 93 mass% is especially preferred.

The melting rate at a retort temperature of core layer (1B) can be adjusted as appropriate by adjusting type(s) and amount(s) of material(s) constituting core layer (1B) and manufacturing condition(s) of core layer (1B) or the sealant film for retort food packaging containers of the first invention of the present application, which comprises core layer (1B).

There is no particular limit on the MFR (melt flow rate) of core layer (1B), and it can be set as appropriate according to manufacturing conditions of core layer (1B) or the sealant film for retort food packaging containers, which comprises core layer (1B), physical properties required for the sealant film for retort food packaging containers and so on. Nevertheless, it is preferable that the MFR (190°C, 2160g load) be 6.0 g/10 min or less.

The MFR of core layer (1B) of 6.0 g/10 min or less enables the sealant film for food packaging containers of the first invention of the present application to achieve both heat resistance at retort temperatures and impact resistance at low temperatures at an even higher level, and to achieve favorable effects, such as improved impact resistance.

The MFR (190°C, 2160 g load) of core layer (1B) is more preferably from 0.1 to 15 g/10 min, and especially preferably from 0.7 to 11 g/10 min.

The MFR of core layer (1B) can be adjusted as appropriate by selecting and adjusting type(s) and amount(s) of material(s) constituting core layer (1B).

If core layer (1B) consists only of a linear polyethylene, or a linear polyethylene and a small amount of additives, the MFR of core layer (1B) is almost determined by the MFR of the linear polyethylene, and in such a case, the MFR of core layer (1B) can be made within the above preferred range by using a linear polyethylene having an MFR (190°C, 2160g load) of 0.1 to 15 g/10 min, more preferably 0.7 to 11 g/10 min.

### Linear polyethylene polymerized using a metallocene catalyst

The linear polyethylene that constitutes core layer (1B) is basically the same type of resin as the linear polyethylene that constitutes seal layer (1A) described above.

However, the linear polyethylene that constitutes core layer (1B) is limited to those polymerized using a metallocene catalyst. Therefore, among the above descriptions regarding the linear polyethylene constituting seal layer (1A), the descriptions which relates to the production of linear polyethylene using catalysts other than metallocene catalyst are not applicable to the linear polyethylene constituting core layer (1B).

Also, as the density of core layer (1B) is 932 kg/m³ or higher and lower than 940 kg/m³, a linear polyethylene having a density that renders the density of the entire layer fall within this range should be used in core layer (1B).

Since a linear polyethylene polymerized using a metallocene catalyst has excellent impact resistance, using a linear polyethylene polymerized using a metallocene catalyst as the linear polyethylene constituting core layer (1B) can further improve impact resistance and achieve both heat resistance and impact resistance at low temperatures at an even higher level.

The density of the linear polyethylene constituting core layer (1B) is set at such a density that the density of core layer (1B) is 932 kg/m³ or higher and lower than 940 kg/m³.

More specifically, the density of the linear polyethylene constituting core layer (1B) is preferably in the range of 932 to less than 940 kg/m³, more preferably in the range of 934 to less than 940 kg/m³, and especially preferably in the range of 936 to less than 940 kg/m³.

From this perspective, a linear low-density polyethylene (LLDPE) is more preferable than a high-density polyethylene (HDPE) as the linear polyethylene that constitutes core layer (1B), and it is preferable to use only a linear low-density polyethylene or a combination in which a linear low-density polyethylene constitutes the majority.

The linear polyethylene content of core layer (1B) is preferably 70 mass% or higher, more preferably 80 to 100 mass%, and particularly preferably 90 to 98 mass%.

In core layer (1B), only one species of linear polyethylene may be used, or alternatively a combination of two or more species of linear polyethylenes may be used. In the case of using a combination of two or more species of linear polyethylenes, the above linear polyethylene content is calculated based on the sum of the masses of the two or more species of linear polyethylenes.

Although there is no particular limit on the thickness of core layer (1B), it is preferable that it be greater than the thicknesses of seal layer (1A) and laminate layer (1C), and it is especially preferable that it be greater than the sum of the thickness of seal layer (1A) and the thickness of laminate layer (1C).

More specifically, the thickness of core layer (1B) is preferably 9 µm or more, and 15 µm or more is especially preferred.

On the other hand, from the viewpoint of raw material cost, etc., the thickness of core layer (1B) is preferably 90 µm or less, and 60 µm or less is especially preferred.

### Laminate layer (1C)

Laminate layer (1C) that constitutes the sealant film for retort food packaging containers of the first invention of the present application comprises a linear polyethylene polymerized using a metallocene catalyst. Therefore, the laminate layer (1C) may consist only of a linear polyethylene polymerized using a metallocene catalyst, or it may contain, in addition to a linear polyethylene polymerized using a metallocene catalyst, other component(s), such as other resin(s) and various additive(s), such as anti-blocking agent(s) and slipping agent(s).

By virtue of containing a linear polyethylene polymerized using a metallocene catalyst in laminate layer (1C), the sealant film for retort food packaging containers of the first invention of the present application can balance retortability (heat resistance at retort temperatures) and impact resistance at low temperatures at a high level, and the sealant film for retort food packaging containers of the first invention can appropriately provide physical properties required for sealant films in general, such as , such as heat sealability, softness, flexibility and airtightness.

The density of laminate layer (1C) is 932 kg/m³ or higher and lower than 940 kg/m³. By virtue of having the density of laminate layer (1C) of 940 kg/m³ or higher and 960 kg/m³ or lower, together with the other requirements of the first invention of the present application, the sealant film for food packaging containers of the first invention of the present application can balance retortability (heat resistance at retort temperatures) and impact resistance at low temperatures at a high level.

The density of laminate layer (1C) is preferably 934 kg/m³ or higher and lower than940 kg/m³, and especially preferably 936 kg/m³ or higher and lower than 940 kg/m³.

The density of laminate layer (1C) can be adjusted as appropriate by adjusting the type(s) and amount(s) of material(s) constituting laminate layer (1C) and the manufacturing conditions of laminate layer (1C) or the sealant film for retort food packaging containers of the first invention of the present application, which comprises laminate layer (1C).

If laminate layer (1C) consists only of a linear polyethylene or a linear polyethylene and a small amount of additives, the density of laminate layer (1C) is almost determined by the density of the linear polyethylene, and in such a case, the density of laminate layer (1C) can be kept in the specified range by using a linier polyethylene having a density of 932 kg/m³ or higher and lower than 940 kg/m³, more preferably 934 kg/m³ or higher and lower than 940 kg/m³.

Although there is no particular limit on the melting point of laminate layer (1C) and it can be set as appropriate according to the application and form of use of the sealant film for retort food packaging containers, it is preferably 120 to 135°C.

By virtue of having the melting point of the laminate layer (1C) falling within the above range, the sealant film for food packaging containers of the first invention of the present application can provide even better retortability (heat resistance at retort temperature).

The melting point of laminate layer (1C) is more preferably 122 to134°C, and especially preferably 125 to 133°C.

The melting point of laminate layer (1C) can be adjusted as appropriate by adjusting type(s) and amount(s) of material(s) constituting laminate layer (1C) or manufacturing condition(s) of laminate layer (1C) or the sealant film for retort food packaging containers of the first invention of this application, which comprises the laminate layer (1C).

If laminate layer (1C) consists only of a linear polyethylene, or only of a linear polyethylene and a small amount of additives, the melting point of laminate layer (1C) is almost determined by the melting point of the linear polyethylene, and in such a case, the melting point of laminate layer (1C) can be set within the above preferred range by using a linear polyethylene having a melting point of 120 to 135°C, preferably 122 to 134°C.

Laminate layer (1C) preferably has a melting rate at retort temperature, e.g., a melting rate at 121°C, of 95 mass% or less.

By virtue of having a melting rate of laminate layer (1C) at the retort temperature falling within the above range, the sealant film for food packaging containers of the first invention of the present application can provide even better retortability (heat resistance at retort temperatures).

The melting rate of laminate layer (1C) at 121°C is more preferably 45 to 95 mass%, and 47 to 93 mass% is especially preferred.

The melting rate of laminate layer (1C) at retort temperature can be adjusted as appropriate by adjusting type(s) and amount(s) of material(s) constituting laminate layer (1C) and manufacturing condition(s) of laminate layer (1C) or the sealant film for retort food packaging containers of the first invention of the present application, which comprises laminate layer (1C).

There is no particular limit on the MFR (melt flow rate) of laminate layer (1C), and it can be set as appropriate according to manufacturing conditions of laminate layer (1C) or sealant film for retort food packaging containers, which comprises laminate layer (1C), physical properties required for a sealant film for retort food packaging containers and so on. Nevertheless, it is preferable that the MFR (190°C, 2160g load) be 6.0 g/10 min or less.

The MFR of laminate layer (1C) of 6.0 g/10 min or less enables the sealant film for food packaging containers of the first invention of the present application to achieve both heat resistance at retort temperatures and impact resistance at low temperatures at an even higher level, and to realize favorable effects, such as improved impact resistance.

The MFR (190°C, 2160 g load) of laminate layer (1C) is more preferably from 0.1 to 15 g/10 min, and especially preferably from 0.7 to 11 g/10 min.

The MFR of the laminate layer (1C) can be adjusted as appropriate by selecting and adjusting type(s) and amount(s) of material(s) constituting laminate layer (1C).

If laminate layer (1C) consists only of a linear polyethylene or a linear polyethylene and a small amount of additives, the MFR of laminate layer (1C) is almost determined by the melting point of the linear polyethylene, and in such cases, the MFR of laminate layer (1C) can be made within the above preferred range by using a linear polyethylene having an MFR (190°C, 2160g load) of 0.1 to 15 g/10min, more preferably 0.7 to 11 g/10min.

### Linear polyethylene polymerized using metallocene catalyst

The linear polyethylene that constitutes laminate layer (1C) is basically the same type of resin as the linear polyethylene that constitutes seal layer (1A) described above.

However, the linear polyethylene constituting laminate layer (1C) is limited to those polymerized using a metallocene catalyst. Therefore, among the above description regarding the linear polyethylene constituting seal layer (1A), the descriptions which relates to the production of linear polyethylene using catalysts other than metallocene catalyst are no applicable to the linear polyethylene constituting laminate layer (1C).

Also, as the density of laminate layer (1C) is 932 kg/m³ or higher and lower than 940 kg/m³, a linear polyethylene having a density that renders the density of the entire layer fall within this range should be used in laminate layer (1C).

Since a linear polyethylene polymerized using a metallocene catalyst has excellent impact resistance, using a linear polyethylene polymerized using a metallocene catalyst as the linear polyethylene constituting laminate layer (1C) can further improve impact resistance and achieve both heat resistance and impact resistance low temperatures at an even higher level.

The density of the linear polyethylene constituting laminate layer (1C) is set at such a density that the density of laminate layer (1C) is 932 kg/m³ or higher and less than 940 kg/m³.

More specifically, the density of the linear polyethylene constituting laminate layer (1C) is preferably in the range of 932 to less than 940 kg/m³, more preferably in the range of 934 to less than 940 kg/m³, and especially preferably in the range of 936 to less than 940 kg/m³.

From this perspective, a linear low-density polyethylene (LLDPE) is more preferable than a high-density polyethylene (HDPE) as the linear polyethylene that constitutes laminate layer (1C), and it is preferable to use only a linear low-density polyethylene or a combination in which a linear low-density polyethylene constitutes the majority.

The linear polyethylene content of laminate layer (1C) is preferably 70 mass% or higher, more preferably 80 to 100 mass%, and particularly preferably 90 to 98 mass%.

In laminate layer (1C), only one species of linear polyethylene may be used, or alternatively a combination of two or more species of linear polyethylenes may be used. In the case of using a combination of two or more species of linear polyethylenes, the above linear polyethylene content is calculated based on the sum of the masses of the two or more species of linear polyethylenes.

Laminate layer (1C) can be laminated with other layers, such as base layer (D) described below, as necessary or desired.

Therefore, it is preferable to design laminate layer (1C) in consideration of lamination strength and other factors between laminate layer (1C) and other layers, such as base layer (D).

Laminate layer (1C) may be subjected to surface treatment, such as corona treatment, to improve adhesion to other layers.

From the viewpoint of preventing blocking when the sealant film for retort food packaging containers of the first invention of the present application is stored, etc., laminate layer (1C) may contain an anti-blocking agent.

As an anti-blocking agent, silica powder, preferably synthetic silica, and so on can be suitably used. From the viewpoint of uniformly dispersing silica powder in laminate layer (1C), the silica powder may be dispersed in a resin having high miscibility with the resin constituting laminate layer (1C) to form a master batch, and the master batch may then be added to laminate layer (1C).

Although there is no particular limit on the thickness of laminate layer (1C), it is preferable that it be 3 µm or thicker, and especially preferable that it be 5 µm or thicker, from the viewpoint of controlling film curl, etc.

On the other hand, from the viewpoint of raw material cost, etc., it is preferable that the thickness be 30 µm or less, and it is especially preferable that it be 20 µm or less.

To any of seal layer (1A), core layer (1B), and laminate layer (1C), various additives and fillers other than those mentioned above, such as heat stabilizers, antioxidants, light stabilizers, antistatic agents, antiblocking agents, lubricants, nucleating agents, flame retardants, pigments, dyes, calcium carbonate, barium sulfate, magnesium hydroxide, mica, talc, clay, antibacterial agents, antifogging agents, etc., can be added. Furthermore, other thermoplastic resins, thermoplastic elastomers, rubbers, etc. (other than those described above) may be blended to the extent not contrary to the purpose of the first invention of the present application.

Various additives may be added in the form of a master batch.

### Sealant film for retort food packaging containers (laminated film)

The sealant film for retort food packaging containers of the first invention of the present application has seal layer (1A), core layer (1B), and laminate layer (1C). In the sealant film for retort food packaging containers of the first invention of the present application, laminate layer (1C) and seal layer (1A) are preferably laminated directly through core layer (1B), but other layer(s) may be present in between.

The sealant film for retort food packaging containers of the first invention of the present application can be manufactured by various known film forming methods. For example, a method in which, after forming each of laminate layer (1C), core layer (1B), and sealant layer (1A) in advance, the films are laminated together to form a sealant film for retort food packaging containers; a method in which, after obtaining a multi-layer film consisting of core layer (1B) and sealant layer (1A) using a multi-layer die, laminate layer (1C) is extruded onto the surface of the core layer (1B) to make a sealant film for retort food packaging containers; a method of obtaining a sealant film for retort food packaging containers comprising laminate layer (1C), core layer (1B) and seal layer (1A) using a multi-layer die; or the like can be employed.

In addition, various known film forming methods, such as T-die cast film forming method and inflation film forming method more specifically, can be employed as the film forming method.

Although the thickness of the sealant film for retort food packaging containers of the first invention of the present application is not particularly limited, from the viewpoint of securing practical strength and so on, it is usually 20 µm or more, preferably 30 µm or more, and more preferably 40 µm or more. On the other hand, from the viewpoint of providing practical flexibility even after being laminated with base layer (D) for example, the thickness is usually 200 µm or less, preferably 170 µm or less, and more preferably 150 µm or less.

The sealant film for retort food packaging containers of the first invention of the present application may be either a stretched film or a non-stretched film, but a non-stretched film is preferred in terms of ease of production and flexibility.

On the other hand, from the viewpoint of improving mechanical properties, a stretched film is preferable, and a biaxially stretched film is especially preferrable.

Biaxial stretching can be done by sequential biaxial stretching, simultaneous biaxial stretching, multi-stage stretching, or other methods as appropriate.

The conditions for biaxial stretching include known conditions for manufacturing biaxially stretched film. For example, in the sequential biaxial stretching method, the longitudinal stretching temperature can be 100°C to 145°C and the stretching ratio can be in the range of 4 to 7 times, and the transverse stretching temperature can be 150°C to 190°C and the stretching ratio can be 8 to 11 times.

The sealant film for retort food packaging containers of the first invention of the present application has a seal layer (1A), a core layer (1B), and a laminate layer (1C) each having a specific density, and the linear polyethylenes constituting core layer (1B) and laminate layer (1C) are each polymerized by using a metallocene catalysts, and, by virtue of which, can balance heat resistance at retort temperatures and impact resistance at low temperatures at a high level beyond the limits of conventional technology.

Here, the heat resistance at retort temperatures means that when retort food packaging formed using sealant film for retort food packaging containers is heat-treated at retort temperature (120°C in the present application), the seal layers on the inner surface of the packaging container are not thermally fused to each other and the packaging container is maintained in a proper condition.

The heat resistance of sealant film for retort food packaging containers can be evaluated by forming a packaging container using the sealant film for retort food packaging containers so that the seal layers (1A) of the film touch each other, retorting at a specified retort temperature, and then determining whether the seal layers (1A) are fused together or not. More specifically, it can be evaluated by the method described in the Examples of the present application.

When evaluated by the method described in the Examples of the present application, a packaging container formed using the sealant film for retort food packaging containers of the first invention of the present application can effectively prevent fusion, such as no fusion or very light fusion that can easily be peeled takes place, when retorting at 121°C for 45 minutes.

In the first invention of the present application, the heat resistance at retort temperatures can be further improved by further optimizing the resin composition, etc. For example, by setting the density of each layer, especially the seal layer (1A), higher, the heat resistance at retort temperatures can be further improved.

The impact resistance at low temperatures can be evaluated by bag breakage by dropping. More specifically, it can be evaluated by the number of droppings until the bag is broken when a bag-shaped packaging container filled with water is formed using sealant film for retort food packaging containers, cooled to 5°C, and repeatedly dropped from a predetermined height. More specifically, it can be evaluated by the method described in the Example of the present application.

When evaluated by the method described in the Examples of the present application, packaging containers formed using the sealant film for retort food packaging containers of the first invention of the present application usually require 15 or more drops, preferably 20 or more drops, and even more preferably 25 or more drops, before the bag breaks.

In the first invention of the present application, the impact resistance at low temperatures can be further improved by further optimizing the resin composition. For example, by setting the density of each layer lower, the impact resistance at low temperatures can be further improved.

### Base layer (D)

If desired, the sealant film for retort food packaging containers of the first invention of the present application can be laminated with base layer (D) on its laminate layer (1C).

Although are no particular restrictions on base layer (D), films with good heat resistance and gas barrier properties that are normally used for retort food packaging containers can be suitably used.

Preferred materials for base layer (D) include plastic films made of thermoplastic resins, for example, polyamides, such as nylon 6, nylon 66, para- or meta-xylene adipamide; polyolefins, such as crystalline polypropylene, crystalline propylene-ethylene copolymer, crystalline polybutene-1, crystalline poly 4-methylpentene-1, low, medium, or high density polyethylene, ethylene-vinyl acetate copolymer (EVA), ethylene-ethyl acrylate copolymer (EEA), and ion cross-linked olefin copolymers (ionomers); aromatic vinyl copolymers, such as polystyrene and styrene-butadiene copolymers; vinyl halide polymers, such as polyvinyl chloride and polyvinylidene chloride resins; nitrile polymers, such as acrylonitrile-styrene copolymer and acrylonitrile-styrene-butadiene copolymer; polyesters, such as polyethylene terephthalate (PET) and polytetramethylene terephthalate; polycarbonates; polyacetals, such as polyoxymethylene. If the contents to be packaged are sensitive to oxygen, a film in which the above film is vapor-deposited with metal, metal oxide, etc. or coated with an organic compound, or a layer made of ethylene vinyl alcohol copolymer (EVOH) resin may be provided.

Plastic films made of these materials may be used unstretched, uniaxially stretched, or biaxially stretched.

As base layer (D), a single layer or two or more of these plastic films can be used, or one or more of these plastic films can be laminated with metal, such as aluminum, foil, paper, cellophane, or the like.

Preferred base layer (D) include, for example, monolayer films consisting of stretched nylon film or stretched polyester film; bi-layer films in which a polyolefin film, such as low-density polyethylene and polypropylene, is laminated with PET, a tri-layer films in which PET/nylon/polyethylene are laminated and so on. In manufacturing these laminated films, adhesives or anchoring agents can be interposed between the layers as needed. An ink layer may also be added to represent a design.

There are no particular restrictions on the method of laminating base layer (D) to laminate layer (1C). For example, the base layer (D) can be directly laminated to the laminate layer (1C) by extrusion lamination or other method. Base layer (D) may also be laminated to laminate layer (1C) via an adhesive layer by dry lamination, etc. Ordinary adhesives, such as urethane adhesives, acid modified polyolefin adhesives, polyester adhesives, polyether adhesives, polyamide adhesives, etc., can be used.

Although the thickness of base layer (D) can be set arbitrarily, it is usually selected from the range of 5 to 1000 µm, preferably 9 to 100 µm.

The sealant film for retort food packaging containers of the first invention of the present application and the laminated film in which base layer (D) is laminated to laminate layer (1C) of the sealant film for retort food packaging containers of the first invention of the present application are suitable films for making up the whole or a part of a retort food packaging container.

There are no restrictions on the shape of the retort food packaging container, and suitable examples include bag-shaped packaging containers and packaging containers consisting of a lid and a body, such as a cup.

When the sealant film for retort food packaging containers of the first invention of the present application is used for retort food packaging containers, for example, the sealant film for retort food packaging containers itself or a laminated film thereof with base layer (D) may be folded and sealed at three sides, or two sheets of the sealant film for retort food packaging containers or the above laminated film may be sealed at four sides. Alternatively, a lid made of the sealant film for retort food packaging containers or a laminated film thereof with base layer (D) and a container body, such as a cup, may be heat-sealed to form a packaging container. One suitable example of such a packaging container is a packaging container comprising the above lidding material and a container body portion comprising at least one of polypropylene, polyethylene terephthalate, and polybutylene terephthalate.

The lid material of the sealant film for retort food packaging containers of the first invention of the application or a laminate thereof with base layer (D) can form a heat seal by heat-bonding it to various container bodies at seal layer (1A). Propylene polymers, polystyrene, polyester, polycarbonate, polyvinyl chloride, etc. can be exemplified as materials for such container bodies. These container bodies can be in various shapes, such as a film, a sheet, a tray, a cup, and a bottle.

There are no particular restrictions on foods to be stored in the retort food packaging containers, and various foods that are conventionally supplied as retort food can be stored therein.

Since the sealant film for retort food packaging containers of the first invention of the present application can balance heat resistance at retort temperatures and impact resistance at low temperatures at a high level beyond the limits of the conventional technology, retort food packaging containers using it are suitable for use in heat and pressure sterilization at 100 to 135°C, preferably at 121°C or lower. In addition, the impact resistance at low temperatures makes it suitable for use in low-temperature storage/distribution (frozen to chilled).

Embodiments for carrying out the second invention of the present application are concretely described as follows.

The second invention of the present application is a sealant film for retort food packaging containers having (2A) seal layer, (2B) core layer, and (2C) laminate layer, each comprising a linear polyethylene, wherein
(2B) core layer and (2C) laminate layer each have a thermal melting rate at 121°C of 30 to 95 mass%,
(2A) seal layer has a thermal melting rate at 121°C is 5 to 50 mass%.

Accordingly, the sealant film for retort food packaging containers of the second invention of the present application has seal layer (2A), core layer (2B), and laminate layer (2C).

### Seal layer (2A)

Seal layer (2A) that constitutes the sealant film for retort food packaging containers of the second invention of the present invention comprises a linear polyethylene. Therefore, seal layer (2A) may consist only of a linear polyethylene, or it may contain, in addition to a linear polyethylene, other components, such as other resins and various additives, such as an anti-blocking agent and slipping agent.

By containing a linear polyethylene in seal layer (2A), the sealant film for retort food packaging containers of the second invention of the present application can balance a wide processable temperature range and impact resistance at low temperatures at a high level, and also has properties required for sealant films in general, such as heat sealability, softness, flexibility and airtightness.

Seal layer (2A) has a thermal melting rate at 121°C of 5 to 50 mass%.

By virtue of the thermal melting rate of seal layer (2A) at 121°C in the range of 5 to 50% by mass, together with the other requirements of the second invention of the present application, the sealant film for retort food packaging containers of the second invention of the present application can expands the processable temperature range.

The melting rate of seal layer (2A) at 121°C is more preferably 35 mass% or less, and especially preferably 30 mass% or less.

The thermal melting rate of seal layer (2A) can be adjusted as appropriate by adjusting type(s) and amount(s) of material(s) constituting seal layer (2A) or manufacturing conditions of seal layer (2A) or the sealant film for retort food packaging containers of the second invention of the present application, which comprises seal layer (2A).

Although there is no limit on the density of seal layer (2A), it preferably is 915 kg/m³ or higher and 960 kg/m³ or lower. The density of seal layer (2A) being 915 kg/m³ or higher and 960 kg/m³ or lower is advantageous for balancing processable temperature range and impact resistance at low temperatures of the sealant film for food packaging containers of the second invention of the present application at a high level.

The density of seal layer (2A) is preferably 925 kg/m³ or higher and 960 kg/m³ or lower, more preferably 930 kg/m³ or higher and 955 kg/m³ or lower, and especially preferably 940 kg/m³ or higher and 953 kg/m³ or lower.

The density of seal layer (2A) can be adjusted as appropriate by adjusting type(s) and amount(s) of material(s) constituting seal layer (2A) or manufacturing conditions of seal layer (2A) or the sealant film for retort food packaging containers of the second invention of the present application, which comprises seal layer (2A).

If seal layer (2A) consists only of a linear polyethylene only, or only of a linear polyethylene and a small amount of additives only, the density of seal layer (2A) is almost determined by the density of the linear polyethylene, and in such a case, the density of seal layer (2A) can be made within the above range by using a linear polyethylene having a density of 915 kg/m³ or higher and 960 kg/m³ or lower, preferably 930 kg/m³ or higher and 955 kg/m³ or lower, more preferably 940 kg/m³ or higher and 953 kg/m³ or lower.

There is no particular limit on the melting point of seal layer (2A), and it can be set as appropriate according to the application and form of use of the sealant film for retort food packaging containers. Nevertheless, it is preferably 120 to 135°C.

By virtue of the melting point of seal layer (2A) falling within the above range, the sealant film for food packaging containers of the second invention of the present application can further expands the processable temperature range.

The melting point of seal layer (2A) is more preferably 122 to 134°C, and especially preferably 125 to 133°C.

The melting point of seal layer (2A) can be adjusted as appropriate by adjusting type(s) and amount(s) of material(s) constituting seal layer (2A) or manufacturing conditions of seal layer (2A) or the sealant film for retort food packaging containers of the second invention of the present application, which comprises seal layer (2A).

If seal layer (2A) consists only of a linear polyethylene, or only of a linear polyethylene and a small amount of additives, the melting point of seal layer (2A) is almost determined by the melting point of the linear polyethylene, and in such a case, the melting point of the seal layer (2A) can be set within the above preferred range by using a linear polyethylene having a melting point of 120 to 135°C, preferably 125 to 133°C.

There is no particular limit on the MFR (melt flow rate) of seal layer (2A), and it can be set as appropriate according to manufacturing conditions of seal layer (2A) or sealant film for retort food packaging containers, which comprises seal layer (2A), physical properties required for a sealant film for retort food packaging containers and so on. Nevertheless, it is preferable that the MFR (190°C, 2160g load) be 0.1 to 15g/10min.

By having the MFR of seal layer (2A) falling within the above range, the sealant film for food packaging containers of the second invention of the present application can be manufactured more easily, and favorable effects, such as the resin pressure during extrusion being in an appropriate range, can be realized.

The MFR (190°C, 2160 g load) of seal layer (2A) is more preferably 0.5 to 12 g/10 min, and particularly preferably 0.7 to 11 g/10 min.

The MFR of seal layer (2A) can be adjusted as appropriate by selecting and adjusting type(s) and amount(s) of material(s) constituting seal layer (2A).

If seal layer (2A) consists only of a linear polyethylene, or only of a linear polyethylene and a small amount of additives, the MFR of seal layer (2A) is almost determined by the melting point of the linear polyethylene, and in such a case, a linear polyethylene having an MFR (190°C, 2160 g load) of 0.1 to 15 g/10 min, more preferably 0.5 to 12 g/10 min, can be used to set the MFR of seal layer (2A) to fall within the above desirable range.

### Linear polyethylene

The linear polyethylene that constitutes seal layer (2A) is only required to be a homopolymer of ethylene or a copolymer of ethylene and other monomer(s) having a main chain that is substantially linear, and no other limitations exist. High-density polyethylene and linear low-density polyethylene are typical forms of the linear polyethylene.

In seal layer (2A), a linear polyethylene that allows the density of seal layer (2A) to be in a preferred range, between 915 kg/m³ or higher and 960 kg/m³ or lower for example, is preferably used.

The linear polyethylene content of seal layer (2A) is preferably 20% by mass or higher, more preferably 25 to 100% by mass, and particularly preferably 30 to 100% by mass.

In seal layer (2A), only one species of linear polyethylene may be used, or a combination of two or more species of linear polyethylenes may be used. In the case of using a combination of two or more species of linear polyethylenes, the polyethylene content mentioned above shall be calculated based on the sum of the masses of said two or more species of linear polyethylenes.

### High-density polyethylene

As high-density polyethylene, which is a typical embodiment of the linear polyethylene, those generally known as high-density polyethylene in the art can be used as appropriate.

High-density polyethylene (HDPE) may be a monopoly polymer of ethylene or a copolymer of ethylene and α-olefin(s).

The above high-density polyethylene preferably has a melt flow rate (hereinafter referred to as "MFR") of 0.1 to 15 g/10 min, more preferably 0.5 to 12.0 g/10 min, and further preferably 0.7 to 11.0 g/10 min, measured at 190°C and 2160 g load in accordance with JIS K6922-1.

MFR in the above range is desirable because it lowers the load on the extruder during the molding process and improves molding stability.

The high-density polyethylene preferably used in this embodiment preferably has a density of 940 to 975 kg/m³ according to JIS K6922-1, more preferably 945 to 965 kg/m³ , and even more preferably 950 to 960 kg/m³.

With the density in the above range, it is easier to make the density of seal layer (2A) be in a preferred range, e.g. 915 kg/m³ or higher and 960 kg/m³ or lower.

The high-density polyethylene preferably used in this embodiment may be commercially available ones, such as Nipolon Hard 5700, 8500, and 8022 (trade names) manufactured by Tosoh Corporation, and Hizex (registered trademark) 3300F manufactured by Prime Polymer Co., Ltd.

The high-density polyethylene preferably used in this embodiment can be produced by manufacturing methods, such as slurry, solution, and vapor phase methods. In the production of the high-density polyethylene in general, a Ziegler catalyst consisting of solid catalyst components comprising magnesium and titanium and an organic aluminum compound; a metallocene catalyst consisting of an organic transition metal compound comprising a cyclopentadienyl derivative and a compound that reacts therewith to form an ionic complex and/or an organometallic compound; a vanadium-based catalyst; and so on can be used, and the production can be carried out by homopolymerizing ethylene or copolymerizing ethylene and α-olefin(s) using such a catalyst. As the α-olefin(s), those generally referred to as an α-olefin can be used, and α-olefins having 3 to 12 carbon atoms, such as propylene, butene-1, hexene-1, octene-1, 4-methyl-1-pentene and so on, are preferable. Examples of the copolymer of ethylene and α-olefin(s) include ethylene/hexene-1 copolymer, ethylene/butene-1 copolymer, ethylene/octene-1 copolymer and so on.

### Linear low-density polyethylene

As linear low-density polyethylene, which is a typical embodiment of the linear polyethylene, those generally known as a linear low-density polyethylene in the technical field can be used as appropriate. Copolymers of ethylene and α-olefin(s) can be used as such a linear low-density polyethylene, and those synthesized by a production method using a known catalyst, such as a Ziegler catalyst or a metallocene catalyst, can be used.

Compounds having 3 to 20 carbons can be used as the alpha-olefin(s), and examples thereof include propylene, 1-butene, 1-pentene, 1-hexene, 1-heptene 1-octene, 1-nonene, 1-decene, 1-dodecene, 4-methyl-1-pentene, 4-methyl-1-hexene, etc., and mixtures there of can also be used. The alpha-olefin(s) is preferably a compound having 4, 6 or 8 carbons, such as 1-butene, 1-hexene, 1-octene, or mixtures thereof.

Nevertheless, it is also possible to multimerize ethylene to produce α-olefin(s) in the polymerization process, in which case the product can be made essentially only from ethylene.

The linear low-density polyethylene may be commercially available ones, for example, 2040F (C₆-LLDPE, MFR; 4.0, density; 0.918 g/cm³) made by Ube Maruzen Polyethylene Corporation, Evolue (registered trademark) SP 2040 made by Prime Polymer Co., Ltd. can be used.

The density of the linear low-density polyethylene is preferably 890 to 940 kg/m³, and more preferably 900 to 930 kg/m³. From the viewpoint of making the density of seal layer (2A) in a preferred range, e.g. 915 kg/m³ or higher and 960 kg/m³ or lower, it is particularly preferred to use those having a relatively high density in the above density range.

The density of linear low-density polyethylene can be adjusted as appropriate by adjusting the comonomer content, and also by selecting and adjusting polymerization conditions, such as the catalyst and the polymerization temperature.

From the viewpoint of making the MFR (190°C, 2160 g load) of seal layer (2A) be in the above preferred range, the MFR (190°C, 2160 g load) of the linear low density polyethylene is preferably 0.1 to 15 g/10 min, more preferably 0.5 to 12 g/10 min, and particularly preferably 0.7 to 11 g/10 min.

The MFR (190°C, 2160g load) of linear low-density polyethylene can be adjusted as appropriate in accordance with conventionally known methods, and can be adjusted by adjusting polymerization conditions, such as the polymerization temperature, or by introducing a molecular weight modifier.

Linear low-density polyethylene can be produced by conventionally known production methods using conventionally known catalysts, including multi-site catalysts, such as Ziegler catalysts, and single-site catalysts, such as metallocene catalysts. From the viewpoint of obtaining linear low-density polyethylene that has a narrow molecular weight distribution and can form high-strength films, it is preferable to use a single-site catalyst.

The above single-site catalysts are catalysts that can form uniform active species and are usually adjusted by contacting a metallocene or non-metallocene transition metal compound with an activating cocatalyst. Single-site catalysts are preferred over multi-site catalysts because they have a more homogeneous active site structure, which allows polymerization of polymers with high molecular weight and a highly uniform structure. As the single-site catalyst, metallocene catalysts are particularly preferably used. The metallocene catalyst is a catalyst comprising catalytic components of a transition metal compound of Group IV of the Periodic Table containing a ligand having a cyclopentadienyl skeleton, an cocatalyst, an organometallic compound if necessary, and a support.

In the above transition metal compounds of Group IV of the Periodic Table containing ligands having a cyclopentadienyl skeleton, the cyclopentadienyl skeleton is a cyclopentadienyl group, a substituted cyclopentadienyl group, etc. The substituted cyclopentadienyl group is one having at least one substituent selected from a hydrocarbon group having 1 to 30 carbons, a silyl group, a silyl substituted alkyl group, a silyl substituted aryl group, a cyano group, a cyanoalkyl group, a cyanoaryl group, a halogen group, a haloalkyl group, a halosilyl group, etc. The substituted cyclopentadienyl group may have two or more substituents, and the substituents may be bonded to each other to form a ring, such as an indenyl ring, a fluorenyl ring, an azulenyl ring, or a hydrogenated form thereof. The rings formed by substituents bonded to each other may further have a substituent.

In the transition metal compounds of Group IV of the Periodic Table containing a ligand having a cyclopentadienyl skeleton, examples of the transition metals include zirconium, titanium, hafnium, etc., and zirconium and hafnium are particularly preferred. The transition metal compound usually has two ligands having a cyclopentadienyl skeleton, and each ligand having a cyclopentadienyl skeleton is preferably connected to each other by a bridging group. Examples of the bridging groups include alkylene groups with 1 to 4 carbons, silylene groups, substituted silylene groups, such as dialkylsilylene groups and diarylsilylene groups, and substituted germylene groups such as dialkylgermylene groups and diarylgermylene groups. and substituted silylene groups are preferably.

In transition metal compounds of Group IV of the Periodic Table, ligands other than those having a cyclopentadienyl skeleton include, as typical ones, hydrogen, hydrocarbon groups (alkyl groups, alkenyl groups, aryl groups, alkylaryl groups, aralkylaryl groups, polyenyl groups, etc.) with 1 to 20 carbon atoms, halogen, meta-alkyl groups, meta-aryl groups, etc.

One species or a mixture of two or more of the above transition metal compounds of Group IV of the Periodic Table containing a ligand having a cyclopentadienyl skeleton can be used as a catalyst component.

Cocatalysts are those that can render the above-mentioned transition metal compounds of Group IV of the Periodic Table effective as a polymerization catalyst or can equalize the ionic charge in catalytically activated state. Examples of the cocatalyst include benzene-soluble aluminoxanes of organoaluminum oxy compounds, benzene-insoluble organoaluminum oxy compounds, ion-exchangeable layered silicates, boron compounds, ionic compounds consisting of cations with or without active hydrogen groups and non-coordinating anions, lanthanide salts, such as lanthanum oxide, tin oxide, phenoxy compounds containing fluorine groups, etc.

Transition metal compounds of Group IV of the Periodic Table containing a ligand having a cyclopentadienyl skeleton may be used being supported on an inorganic or organic compound carrier. Porous oxides of inorganic or organic compounds are preferred as the carrier. Concrete examples thereof include ion-exchangeable layered silicates, SiO₂, Al₂O₃, MgO, ZrO₂, TiO₂, B₂O₃, CaO, ZnO, BaO, ThO₂ etc. and mixtures thereof.

Further, organometallic compounds used as necessary include organoaluminum compounds, organomagnesium compounds, and organozinc compounds. Of these, organoaluminum is preferably used.

From the viewpoint of obtaining linear low-density polyethylene with wide molecular weight distribution and excellent flexibility and moldability, it is preferable to use a multi-site catalyst, such as a Ziegler catalyst and a Phillips catalyst.

Preferred Ziegler catalysts are those generally known as Ziegler catalysts for the coordination polymerization of ethylene and α-olefins, such as catalysts containing a titanium compound and an organoaluminum compound, and examples thereof include catalysts consisting of a titanium halide compound and an organoaluminum compound, and catalysts consisting of a solid catalyst component consisting of titanium, magnesium, chlorine and so on and an organoaluminum compound. More specific examples of such catalysts include: catalysts consisting of (ai) a catalytic component obtained by reacting a titanium compound with a reaction product of an anhydrous magnesium dihalide pretreated with an alcohol and an organometallic compound (bi) an organometallic compound; catalysts consisting of (aii) a catalytic component obtained by reacting magnesium metal and an organic hydroxide compound or an oxygen-containing organic compound of magnesium or the like, an oxygen-containing organic compound of a transition metal, and an aluminum halide compound and (bii) a catalyst component of an organometallic compound; and catalysts consisting of (aiii) solid catalyst component obtained by reacting (i) at least one selected from selected from magnesium metal and an organic hydroxide compound, and an oxygen-containing organic compound of magnesium and a halogen-containing compound of magnesium, (ii) at least one selected from an oxygen-containing organic compound of a transition metal and a halogen -containing organic compound of a transition metal, (iii) a reaction product obtained by reacting a silicon compound, and (iv) an aluminum halide compound and (biii) a catalyst component of an organometallic compound.

The Phillips catalyst can be those generally known as a Phillips catalyst for coordination polymerization of ethylene and α-olefin, which can be a catalyst systems containing a chromium compound, such as chromium oxide, etc., and concrete examples thereof include catalysts in which a chromium compound, such as chromium trioxide, a chromate ester, etc., is supported on solid oxide, such as silica, alumina, silica-alumina and silica-titania.

Seal layer (2A) may contain components other than the linear polyethylene described above, such as polymers other than the linear polyethylene, oligomers, anti-blocking agents, slip agents, heat stabilizers (antioxidants), weather stabilizers, UV absorbers, lubricants, nuclear agents, antistatic agents, antifogging agents, pigments, and dyes. In addition, various fillers, such as talc, silica, diatomaceous earth, etc., can be blended as needed or to the extent not contrary to the purpose of the second invention of the present application.

These additives may be pre-blended into linear polyethylene or added in forming seal layer (2A) from a linear polyethylene.

While there is no particular limit on the thickness of seal layer (2A), from the viewpoint of good sealing characteristics, etc., it is preferable that the thickness be 3 µm or greater, 4 µm or greater is more preferable, and 5 µm or greater is especially preferable.

On the other hand, from the viewpoint of flexibility and economic efficiency, the thickness of seal layer (2A) is preferably 30 µm or less, more preferably 25 µm or less, and especially preferably 20 µm or less.

If stretching is performed in the production of the laminated film in the second invention of the present application, it is preferable that the stretching ratio be1 to 100 times in terms of area ratio, and it is especially preferable that it be 4 to 80 times. The thickness of the layer corresponding to seal layer (2A) before stretching is preferably 0.3 to 12 mm, and 0.5 to 4 mm is particularly preferable.

The thickness of seal layer (2A) can be adjusted by adjusting the stretching conditions, such as stretching ratio, the thickness of the layer before stretching, and the lip spacing of the die used to form the layer before said stretching.

### Core layer (2B)

Core layer (2B) is a layer comprising a linear polyethylene, and its thermal melting rate at 121°C is 30 to 95 mass%.

By virtue of having the melting rate at 121°C of core layer (2B) falling within the above range, together with the other requirements of the second invention of the present application, the sealant film for food packaging containers of the second invention of the present application can balance a wide processable temperature range and impact resistance at low temperatures at a high level.

The melting rate at 121°C of core layer (2B) is more preferably 45 to 95 mass%, and particularly preferably 47 to 93 mass%.

The melting rate at 121°C of core layer (2B) can be adjusted as appropriate by adjusting type(s) and amount(s) of material(s) constituting core layer (2B) or manufacturing conditions of core layer (2B), or the sealant film for retort food packaging containers of the second invention of the present application, which comprises the core layer (2B).

Core layer (2B) that constitutes the sealant film for retort food packaging containers of the second invention of the present application preferably comprises a linear polyethylene polymerized using a metallocene catalyst. Therefore, core layer (2B) may consist only of a linear polyethylene polymerized using a metallocene catalyst, or it may contain, in addition to a linear polyethylene polymerized using a metallocene catalyst, other components, such as other resin(s) and various additives, such as anti-blocking agents and slipping agents.

Since a linear polyethylene polymerized using a metallocene catalyst has excellent impact resistance, by virtue of comprising a linear polyethylene polymerized using a metallocene catalyst in core layer (2B), the sealant film for retort food packaging containers of this embodiment can balance the processable temperature range and impact resistance at low temperatures at a high level. It can also provide appropriate physical properties required for sealant films in general, such as heat sealability, softness, flexibility, and airtightness.

While there is no particular limit on the density of core layer (2B), it is preferably 932 kg/m³ or higher and lower than 940 kg/m³. The density of core layer (2B) of 932 kg/m³ or higher and 940 kg/m³ or lower is advantageous for balancing processable temperature range and impact resistance at low temperatures of the sealant film for food packaging containers of the second invention of the present application at a high level.

The density of core layer (2B) is more preferably 934 kg/m³ or higher and lower than 940 kg/m³, and especially preferably 936 kg/m³ or higher and lower than 940 kg/m³.

The density of core layer (2B) can be adjusted as appropriate by adjusting type(s) and amount(s) of material(s) constituting core layer (2B) or manufacturing conditions of core layer (2B), or the sealant film for retort food packaging containers of the second invention of the present application, which comprises core layer (2B).

If core layer (2B) consists only of a linear polyethylene, or only of a linear polyethylene and a small amount of additives, the density of core layer (2B) is almost determined by the density of the linear polyethylene, and in such a case, the density of core layer (2B) can be kept in the preferred range mentioned above by using a linear polyethylene having a density of 932 kg/m³ or higher and lower than 940 kg/m³, preferably 934 kg/m³ or higher and lower than 940 kg/m³.

There is no particular limit on the melting point of core layer (2B), and it can be set as appropriate according to the application and form of use of the sealant film for retort food packaging containers and is preferably 120 to 135°C.

By virtue of the melting point of core layer (2B) falling within the above range, processable temperature range of the sealant film for food packaging containers of the second invention of the present application can be further expanded.

The melting point of core layer (2B) is more preferably 122 to 134°C, and particularly preferably 125 to 133°C.

The melting point of core layer (2B) can be adjusted as appropriate by adjusting type(s) and amount(s) of material(s) constituting core layer (2B) or manufacturing conditions of core layer (2B), or the sealant film for retort food packaging containers of the second invention of the present application, which comprises core layer (2B).

If core layer (2B) consists only of a linear polyethylene, or only of a linear polyethylene and a small amount of additives, the melting point of the core layer (2B) is almost determined by the melting point of the linear polyethylene, and in such a case, the melting point of core layer (2B) can be set within the above preferred range by using a linear polyethylene having a melting point of 120 to135°C, preferably 122 to 134°C.

There is no particular limit on the MFR (melt flow rate) of core layer (2B), and it can be set as appropriate according to manufacturing conditions of core layer (2B), or the sealant film for retort food packaging containers, which comprises core layer (2B), physical properties required for the sealant film for retort food packaging containers and so on. Nevertheless, it is preferable that the MFR (190°C, 2160g load) be 6.0 g/10 min or less.

The MFR of core layer (2B) of 6.0 g/10 min or less enables the sealant film for food packaging containers of the second invention of the present application to balance processable temperature range and impact resistance at low temperatures at an even higher level, and to realize favorable effects, such as improved impact resistance.

The MFR (190°C, 2160 g load) of core layer (2B) is more preferably from 0.1 to 15 g/10 min, and particularly preferably from 0.7 to 11 g/10 min.

The MFR of core layer (2B) can be adjusted as appropriate by selecting and adjusting type(s) and amount(s) of material(s) constituting core layer (2B).

If core layer (2B) consists only of a linear polyethylene, or a linear polyethylene and a small amount of additives, the MFR of core layer (2B) is almost determined by the melting point of the linear polyethylene, and in such a case, the MFR of core layer (2B) can be made to fall within the above preferred range by using a linear polyethylene having an MFR (190°C, 2160g load) of 0.1 to 15 g/10 min, more preferably 0.7 to 11 g/10 min.

It is preferable to use a linear polyethylene polymerized using a metallocene catalyst in core layer (2B). In this case, while the linear polyethylene is basically the same type of resin as the linear polyethylene that constitutes seal layer (2A) described above, the descriptions regarding the production of linear polyethylene using catalysts other than metallocene catalyst are not applicable to the linear polyethylene polymerized by using a metallocene catalyst.

The density of the linear polyethylene constituting core layer (2B) is preferably set at such a density that the density of core layer (2B) is within the preferred range, 932 kg/m³ or higher and lower than 940 kg/m³ for example.

More specifically, the density of the linear polyethylene constituting core layer (2B) is preferably in the range of 932 kg/m³ or higher and lower than 940 kg/m³, more preferably in the range of 934 kg/m³ or higher and less than 940 kg/m³, and particularly preferably 936 kg/m³ or higher and 940 kg/m³ or lower.

From this perspective, a linear low-density polyethylene (LLDPE) is more preferable than a high-density polyethylene (HDPE) as the linear polyethylene that constitutes core layer (2B), and it is preferable to use only a linear low-density polyethylene or a combination in which a linear low-density polyethylene constitutes the majority.

The linear polyethylene content of core layer (2B) is preferably 70 mass% or higher, more preferably 80 to 100 mass%, and particularly preferably 90 to 98 mass%.

In core layer (2B), only one species of linear polyethylene may be used, or alternatively a combination of two or more species of linear polyethylenes may be used. In the case of using a combination of two or more species of linear polyethylenes, the above linier polyethylene content is calculated based on the sum of the masses of the two or more species of linear polyethylenes.

Although there is no particular limit on the thickness of core layer (2B), it is preferable that it be greater than the thicknesses of seal layer (2A) and laminate layer (2C), and it is especially preferable that it be greater than the sum of the thickness of seal layer (2A) and the thickness of laminate layer (2C).

More specifically, the thickness of core layer (2B) is preferably 9 µm or more, and 15 µm or more is especially preferred.

On the other hand, from the viewpoint of raw material cost, etc., the thickness of core layer (2B) is preferably 90 µm or less, and 60 µm or less is especially preferred.

### Laminate layer (2C)

Laminate layer (2C) is a layer comprising a linear polyethylene, and its thermal melting rate at 121°C is 30 to 95 mass%.

By virtue of having the melting rate at 121°C of laminate layer (2C) falling within the above range, together with the other requirements of the second invention of the present application, the sealant film for food packaging containers of the second invention of the present application can balance a wide processable temperature range and impact resistance at low temperatures at a high level.

The melting rate at 121°C of laminate layer (2C) is more preferably 45 to 95 mass%, and particularly preferably 47 to 93 mass%.

The melting rate at 121°C of laminate layer (2C) can be adjusted as appropriate by adjusting type(s) and amount(s) of material(s) constituting laminate layer (2C) or manufacturing conditions of laminate layer (2C), or the sealant film for retort food packaging containers of the second invention of the present application, which comprises the laminate layer (2C).

Laminate layer (2C) that constitutes the sealant film for retort food packaging containers of the second invention of the present application preferably comprises a linear polyethylene polymerized using a metallocene catalyst. Therefore, laminate layer (2C) may consist only of a linear polyethylene polymerized using a metallocene catalyst, or it may contain, in addition to a linear polyethylene polymerized using a metallocene catalyst, other components, such as other resin(s) and various additives, such as anti-blocking agents and slipping agents.

Since a linear polyethylene polymerized using a metallocene catalyst has excellent impact resistance, by virtue of comprising a linear polyethylene polymerized using a metallocene catalyst in laminate layer (2C), the sealant film for retort food packaging containers of this embodiment can balance the processable temperature range and impact resistance at low temperatures at a high level. It can also provide appropriate physical properties required for sealant films in general, such as heat sealability, softness, flexibility, and airtightness.

While there is no particular limit on the density of laminate layer (2C), it is 932 kg/m³ or higher and lower than 940 kg/m³. The density of laminate layer (2C) of 932 kg/m³ or higher and 940 kg/m³ or lower is advantageous in balancing the processable temperature range and impact resistance at low temperatures of the sealant film for food packaging containers of the second invention of the present application at a high level.

The density of laminate layer (2C) is more preferably 934 kg/m³ or higher and lower that 940 kg/m³, and especially preferably 936 kg/m³ or higher and lower than 940 kg/m³.

The density of laminate layer (2C) can be adjusted as appropriate by adjusting type(s) and amount(s) of material(s) constituting laminate layer (2C) or manufacturing conditions of laminate layer (2C), or the sealant film for retort food packaging containers of the second invention of the present application, which comprises laminate layer (2C).

If laminate layer (2C) consists only of a linear polyethylene, or only of a linear polyethylene and a small amount of additives, the density of laminate layer (2C) is almost determined by the density of the linear polyethylene, and in such cases, the density of the laminate layer (2C) can be kept within the preferred range mentioned above by using a linear polyethylene having a density of 932 kg/m³ or higher and lower than 940 kg/m³, preferably 934 kg/m³ or higher and lower than 940 kg/m³.

There is no particular limit on the melting point of laminate layer (2C), and it can be set as appropriate according to the application and form of use of the sealant film for retort food packaging containers and is preferably 120 to 135°C.

By virtue of the melting point of laminate layer (2C) falling within the above range, processable temperature range of the sealant film for food packaging containers of the second invention of the present application can be further expanded.

The melting point of laminate layer (2C) is more preferably 122 to 134°C, and particularly preferably 125 to 133°C.

The melting point of laminate layer (2C) can be adjusted as appropriate by adjusting type(s) and amount(s) of material(s) constituting laminate layer (2C) ore manufacturing conditions of laminate layer (2C), or the sealant film for retort food packaging containers of the second invention of the present application, which comprises laminate layer (2C).

If laminate layer (2C) consists only of a linear polyethylene, or only of a linear polyethylene and a small amount of additives, the melting point of the laminate layer (2C) is almost determined by the melting point of the linear polyethylene, and in such a case, the melting point of laminate layer (2C) can be set within the above preferred range by using a linear polyethylene having a melting point of 120 to135°C, preferably 122 to 134°C.

There is no particular limit on the MFR (melt flow rate) of laminate layer (2C), and it can be set as appropriate according to manufacturing conditions of laminate layer (2C), or the sealant film for retort pouch packaging containers, which comprises laminate layer (2C), physical properties required for the sealant film for retort food packaging containers, and so on. Nevertheless, it is preferable that the MFR (190°C, 2160g load) be 6.0 g/10 min or less.

The MFR of laminate layer (2C) of 6.0 g/10 min or less enables the sealant film for food packaging containers of the second invention of the present application to balance processable temperature range and impact resistance at low temperatures at an even higher level, and to realize favorable effects, such as improved impact resistance.

The MFR (190°C, 2160g load) of laminate layer (2C) is more preferably from 0.1 to 15 g/10 min, and especially preferably from 0.7 to 11 g/10 min.

The MFR of laminate layer (2C) can be adjusted as appropriate by selecting and adjusting type(s) and amount(s) of material(s) constituting laminate layer (2C).

If laminate layer (2C) consists only of a linear polyethylene, or only of a linear polyethylene and a small amount of additives, the MFR of laminate layer (2C) is almost determined by the melting point of the linear polyethylene, and in such cases, the MFR of laminate layer (2C) can be made to fall within the above preferred range by using a linear polyethylene having an MFR (190°C, 2160g load) of 0.1 to 15 g/10min, more preferably 0.7 to 11 g/10min.

It is preferable to use a linier polyethylene polymerized using a metallocene catalyst in laminate layer (2C). In this case, while the linear polyethylene is basically the same type of resin as the linear polyethylene that constitutes seal layer (2A) described above, the descriptions regarding the production of linear polyethylene using catalysts other than metallocene catalyst are not applicable to the linear polyethylene polymerized by using a metallocene catalyst.

The density of the linear polyethylene constituting laminate layer (2C) is preferably set at such a density that the density of laminate layer (2C) is within the preferred range, 932 kg/m³ or higher and lower than 940 kg/m³ for example.

More specifically, the density of the linear polyethylene constituting laminate layer (2C) is preferably in the range of 932 kg/m³ or higher and lower than 940 kg/m³, more preferably in the range of 934 kg/m³ or higher and lower than 940 kg/m³, and particularly preferably 936 kg/m³ or higher and lower than 940 kg/m³.

From this perspective, a linear low-density polyethylene (LLDPE) is more preferable than a high-density polyethylene (HDPE) as the linear polyethylene that constitutes laminate layer (2C), and it is preferable to use only a linear low-density polyethylene or a combination in which a linear low-density polyethylene constitutes the majority.

The linear polyethylene content of laminate layer (2C) is preferably 70 mass% or higher, more preferably 80 to 100 mass%, and particularly preferably 90 to 98 mass%.

In laminate layer (2C), only one species of linear polyethylene may be used, or alternatively a combination of two or more species of linear polyethylenes may be used. In the case of using a combination of two or more species of linear polyethylenes, the above linier polyethylene content is calculated based on the sum of the masses of the two or more species of linear polyethylenes.

The laminate layer (2C) can be laminated with other layers, such as base layer (D) described below, as necessary or desired.

Therefore, it is desirable to design laminate layer (2C) in consideration of lamination strength and other factors between laminate layer (2C) and other layers, such as base layer (2D).

Laminate layer (2C) may be subjected to surface treatment, such as corona treatment, to improve adhesion to other layers.

From the viewpoint of preventing blocking when the sealant film for retort food packaging containers of the second invention of the present application is stored, etc., laminate layer (2C) may contain an anti-blocking agent.

As an anti-blocking agent, silica powder, preferably synthetic silica, and so on can be suitably used. From the viewpoint of uniformly dispersing silica powder in laminate layer (2C), the silica powder may be dispersed in a resin having high miscibility with the resin constituting laminate layer (2C) to form a master batch, and the master batch may then be added to laminate layer (2C).

Although there is no particular limit on the thickness of laminate layer (2C), it is preferable that it be 3 µm or thicker, and especially preferable that it be 5 µm or thicker, from the viewpoint of controlling film curl, etc.

On the other hand, from the viewpoint of raw material cost, etc., it is preferable that the thickness be 30 µm or less, and it is especially preferable that it be 20 µm or less.

To any of seal layer (2A), core layer (2B), and laminate layer (2C), various additives and fillers other than those mentioned above, such as heat stabilizers, antioxidants, light stabilizers, antistatic agents, antiblocking agents, lubricants, nucleating agents, flame retardants, pigments, dyes, calcium carbonate, barium sulfate, magnesium hydroxide, mica, talc, clay, antibacterial agents, antifogging agents, etc. can be added. In addition, other thermoplastic resins, thermoplastic elastomers, rubbers, etc. (other than those described above) may be blended to the extent not contrary to the purpose of the second invention of the present application.

Various additives may be added in the form of a master batch.

### Sealant film for retort food packaging containers (laminated film)

The sealant film for retort food packaging containers of the second invention of the present application has seal layer (2A), core layer (2B), and laminate layer (2C). In the sealant film for retort food packaging containers of the second invention of the present application, laminate layer (2C) and seal layer (2A) are preferably laminated directly through core layer (2B), but other layer(s) may be present in between.

The sealant film for retort food packaging containers of the second invention of the present application can be manufactured by various known film forming methods. For example, a method in which, after forming each of laminate layer (2C), core layer (2B), and sealant layer (2A) in advance, the films are laminated together to form a sealant film for retort food packaging containers; a method in which, after obtaining a multi-layer film consisting of core layer (1B) and sealant layer (2A) using a multi-layer die, laminate layer (2C) is extruded onto the surface of the core layer (2B) to make a sealant film for retort food packaging containers; a method of obtaining a sealant film for retort food packaging containers comprising laminate layer (2C), core layer (2B) and seal layer (2A) using a multi-layer die; or the like can be employed.

In addition, various known film forming methods, such as T-die cast film forming method and inflation film forming method more specifically, can be employed as the film forming methods.

Although the thickness of the sealant film for retort food packaging containers of the second invention of the present application is not particularly limited, from the viewpoint of securing practical strength and so on, it is usually 20 µm or more, preferably 30 µm or more, and more preferably 40 µm or more. On the other hand, from the viewpoint of providing practical flexibility even after being laminated with base layer (D) for example, the thickness is usually 200 µm or less, preferably 170 µm or less, and more preferably 150 µm or less.

The sealant film for retort food packaging containers of the second invention of the present application can be either a stretched film or a non-stretched film, but a non-stretched film is preferred in terms of ease of production and flexibility.

On the other hand, from the viewpoint of improving mechanical properties, a stretched film is preferable, and a biaxially stretched film is especially preferrable.

Biaxial stretching can be done by sequential biaxial stretching, simultaneous biaxial stretching, multi-stage stretching, or other methods as appropriate.

The conditions for biaxial stretching include known conditions for manufacturing biaxially stretched film. For example, in the sequential biaxial stretching method, the longitudinal stretching temperature can be 100°C to 145°C and the stretching ratio can be in the range of 4 to 7 times, and the transverse stretching temperature can be 150°C to 190°C and the stretching ratio can be 8 to 11 times.

The sealant film for retort food packaging containers of the second invention of the present application has (2A) seal layer, (2B) core layer, and (2C) laminate layer each having a specific thermal melting rate, and, by virtue of which, can balance a wide processable temperature range and impact resistance at low temperatures at a high level beyond the limits of conventional technology.

The processable temperature range herein refers to the range of retort temperatures with which a packaging container can be easily opened without significant deformation after the packaging container is formed in such a manner that (2A) seal layers contact with each other and then subject to retort treatment at the retort temperature.

The processable temperature range of a sealant film for retort food packaging containers can be evaluated by forming a packaging container using the sealant film for retort food packaging containers in such a manner that (2A) seal layers of the films are in contact with each other, subjecting it to retort treatment at predetermined retort temperatures, and then determining whether and to what extent the seal layers (2A) are fused together. More specifically, it can be evaluated by the method described in the Examples.

When evaluated by the method described in the Examples of the present application, packaging containers formed using the sealant film for retort food packaging containers of the second invention of the present application is preferably able to prevent fusion effectively, such as no fusion or very light fusion that can easily be peeled off takes place when retort-treated at least for 45 minutes at 115 to 117°C, it preferably has a processable temperature range of 115 to 117°C in other words. The processable temperature range herein is more preferably115 to 120°C, and further preferably 115 to 121°C.

In the second invention of the present application, the processable temperature range can be further expanded by further optimizing the resin composition, etc. For example, by setting the density of each layer, especially the seal layer (2A), higher or the melting rate lower, the processable temperature range can be further expanded.

The impact resistance at low temperatures can be evaluated by bag breakage by dropping. More specifically, it can be evaluated by the number of droppings until the bag is broken when a bag-shaped packaging container filled with water is formed using a sealant film for retort food packaging containers, cooled to 5°C, and repeatedly dropped from a predetermined height. Further specifically, it can be evaluated by the method described in the Example of the present application.

When evaluated by the method described in the Examples of the present application, packaging containers formed using the sealant film for retort food packaging containers of the second invention of the present application usually require 15 or more drops, preferably 20 or more drops, and even more preferably 25 or more drops, before the bag breaks.

In the second invention of the present application, the impact resistance at low temperatures can be further improved by further optimizing the resin composition. For example, by setting the density of each layer lower, the impact resistance at low temperatures can be further improved.

### Base layer (D)

If desired, the sealant film for retort food packaging containers of the second invention of the present application can be laminated with base layer (D) on its laminate layer (2C).

The details of base layer (D) and its preferred form are the same as those described above in connection with the embodiment of the first invention of the present application.

The sealant film for retort food packaging containers of the second invention and the laminated film in which base layer (D) is laminated to laminate layer (2C) of the sealant film for retort food packaging containers of the second invention of the present application are suitable films for making up the whole or part of a retort food packaging container.

There are no restrictions on the shape of the retort food packaging, and suitable examples include bag-shaped packaging containers and packaging containers consisting of a lid and a body, such as a cup.

When the sealant film for retort food packaging containers of the second invention of the present application is used for retort food packaging containers, for example, the sealant film for retort food packaging containers itself or a laminated film thereof with base layer (D) may be folded and sealed at three sides, or two sheets of the sealant film for retort food packaging containers or the above laminated film may be sealed at four sides. Alternatively, a lid made of the sealant film for retort food packaging containers or a laminated film thereof with base layer (D) and a container body, such as a cup, may be heat-sealed to form a packaging container. One suitable example of such a packaging container is a packaging container comprising the above lidding material and a container body portion comprising at least one of polypropylene, polyethylene terephthalate, and polybutylene terephthalate.

The lid material of the sealant film for retort food packaging containers of the second invention of the application or a laminate thereof with base layer (D) can form a heat seal by heat-bonding it to various container bodies at seal layer (2A). Propylene polymers, polystyrene, polyester, polycarbonate, polyvinyl chloride, etc. can be exemplified as materials for such container bodies. These container bodies can be in various shapes, such as a film, a sheet, a tray, a cup, and a bottle.

There are no particular restrictions on foods to be stored in the retort food packaging containers, and various foods that are conventionally supplied as retort food can be stored therein.

Since the sealant film for retort food packaging containers of the second invention of the present application can balance a wide processable temperature range and impact resistance at low temperatures at a high level beyond the limits of the conventional technology, retort food packaging containers using it
has a high versatility regarding retort treatment processes and food to be stored therein and thus are suitably used in heat and pressure sterilization at 100-135°C, preferably at 121°C or lower. In addition, the impact resistance at low temperatures makes it suitable for use in low-temperature storage/distribution (frozen to chilled).

### EXAMPLES

Hereinafter, the first invention of the present application will be specifically explained with reference to Examples/Comparative Examples/Reference Examples concerning the first invention of the present application. The first invention of the present application is not limited by any means by the following examples.

The evaluations of physical properties and characteristics in the Examples/Comparative Examples/Reference Examples related to the first invention of the present application were conducted by the following methods.

### (1) Heat resistance (retortability)

A laminate film was made by laminating laminate layer (1C) of the sealant film of each example/comparison example onto a substrate (a nylon film of 15µm thickness).

The sides of seal layer (1A) of a pair of the above laminate films were overlapped and heat-sealed at three edges to make a three-side sealed bag.

After deaeration was carried out so that the inner faces of the three-side sealed bag are in contact with each other, the remaining one edge of the three-side sealed bag was heat sealed and retort-treated at 115°C or 120°C for 45 minutes.

The presence or absence fusion inside the three-side sealed bag and the degree thereof were evaluated by sensory test based on the following criteria. A case where the three-side sealed bag could be opened easily was judged as acceptable (Good), while a case where the bag was difficult to open due to fusion was judged as unacceptable (N.G.).

### (2) Low-temperature impact resistance (bag breakage by dropping)

A laminate film was made by laminating laminate layer (1C) of the sealant film of each example/comparison example onto a substrate (a nylon film of 15µm thickness).

The sides of seal layer (1A) of a pair of the above laminate films were overlapped and heat-sealed at three edges to make a three-side sealed bag.

The above three-side sealed bag was filled with 300 mL of water, and the remaining one edge was heat-sealed to form a sealed bag, which was then retort-treated at 121°C.

The bag was then stored in a refrigerator at 5°C for 24 hours, dropped repeatedly in the refrigerator at 5°C until the bag broke, and the number of drops at the time of the bag breakage was recorded. A 1.0 kg weight was placed on the bag and the bag was dropped from a height of 60 cm together with the weight.

The number of samples N was 10, and the average number of drops at the time of the bag breakage was used as the evaluation value for the Example/Comparative Example.

### (3) Melting point

The melting point was measured with a differential scanning calorimeter (DSC) (TA Instruments, "Q200", software: "TA Universal Analysis") at the temperature elevation rate of 10°C/min.

Details of each component, such as resins, used in the Examples/Comparative Examples/Reference Examples related to the first invention of the present application are as follows.
(LLDPE-a1)
   Metallocene LLDPE (linear low-density polyethylene)
   Composition: Ethylene-C6 copolymer
   Melting point: 130°C
   Density: 937 kg/m³
   MFR (2.16 kg, 190°C): 1.8 g/10 min
(LLDPE-a2)
   Metallocene LLDPE (linear low-density polyethylene)
   Composition: Ethylene-C6 copolymer
   Melting point: 129°C
   Density: 938 kg/m³
   MFR (2.16 kg, 190°C): 3.8 g/10 min
(LLDPE-a3)
   Non-metallocene LLDPE (linear low-density polyethylene)
   Composition: Ethylene-alpha olefin copolymer
   Melting point: 127°C
   Density: 941 kg/m³
   MFR (2.16 kg, 190°C): 4.0 g/10 min
(LLDPE-a4)
   Metallocene LLDPE (linear low-density polyethylene)
   Composition: Ethylene-C6 copolymer
   Melting point: 94°C
   Density: 904 kg/m³
   MFR (2.16 kg, 190°C): 1.2 g/10 min
(LLDPE-a5)
   Metallocene LLDPE (linear low-density polyethylene)
   Composition: Ethylene-alpha olefin copolymer
   Melting point: 130°C
   Density: 946 kg/m³
   MFR (2.16 kg, 190°C): 2.8 g/10 min
(LLDPE-a6)
   Non-metallocene LLDPE (linear low-density polyethylene)
   Composition: Ethylene-C6 copolymer
   Melting point: 126°C
   Density: 937 kg/m³
   MFR (2.16 kg, 190°C): 2.3 g/10 min
(HDPE-a1)
   HDPE (high-density polyethylene)
   Composition: Ethylene copolymer
   Melting point: 131°C
   Density: 949 kg/m³
   MFR (2.16 kg, 190°C): 1.1 g/10 min
(Anti-blocking agent master batch-a)
   (Product name: EAZ-30, manufactured by Prime Polymer Co.)
   Composition in which 30 mass% of synthetic zeolite as an anti-blocking agent and 70% mass% of low density polyethylene as a base resin are formulated.
(Slipping agent master batch-a)
   (Product name: ESQ-4, manufactured by Prime Polymer Co.)
   Composition in which 4 mass% of erucamide as a slipping agent and 96 mass% of low density polyethylene as a base resin are formulated.

### (Example a1)

The resins for each layer listed in Table 1 were fed to separate extruders, and the T-die method was used to form a sealant film for retort food packaging containers, which is a laminate film having the total thickness of 50 µm consisting of a three-layer co-extruded film of seal layer (1A), core layer (1B), and laminate layer (1C) with the thickness ratio of 15:65:20, was formed.

In addition to the resins for each layer listed in Table 1, 6 mass% of anti-blocking agent masterbatch a and 1.5 mass% of slipping agent masterbatch a were added to seal layer (1A), and 1 mass% of anti-blocking agent masterbatch a was added to laminate layer (1C).

The resulting sealant film for retort food packaging containers was evaluated for heat resistance (retortability) and low-temperature impact resistance (bag breakage by dropping) according to the methods described above.

The results are shown in Table 1.

### (Examples a2 to a4, Comparative Examples a1 to a2, and Reference Example a1)

Sealant films for retort food packaging containers were prepared and evaluated in the same manner as in Example a1, except that the resin for each layer was changed as described in Table 1, respectively.

The results are shown in Table 1.

### [Table 1]

**Table 1**

| | | | Example a1 | Example a2 | Example a3 | Example a4 | Comparative Example a1 | Reference Example a1 | Comparative Example a2 |
|---|---|---|---|---|---|---|---|---|---|
| film thickness | | | 50 *µ* m | 50 *µ* m | 50 *µ* m | 50 *µ* m | 50 *µ* m | 50 *µ* m | 50 *µ* m |
| resin for each layer | laminate layer | | LLDPE-a1 | LLDPE-a1 | LLDPE-a2 | LLDPE-a1 | LLDPE-a4 | LLDPE-a6 | LLDPE-a3 |
| | core layer | | LLDPE-at | LLDPE-a1 | LLDPE-a2 | LLDPE-a1 | LLDPE-e4 | LLDPE-a6 | LLDPE-a3 |
| | seal layer | | LLDPE-a3 | HDPE-a1 | LLDPE-a5 | LLDPE-a5 | LLDPE-a5 | LLDPE-a5 | LLDPE-a3 |
| melting point (°C) | laminate layer | | 130 | 130 | 129 | 130 | 94 | 126 | 127 |
| | core layer | | 130 | 130 | 129 | 130 | 94 | 126 | 127 |
| | seal layer | | 127 | 131 | 130 | 130 | 130 | 130 | 127 |
| density (kg/m³) | laminate layer | | 936 | 936 | 938 | 936 | 904 | 937 | 941 |
| | core layer | | 936 | 936 | 938 | 936 | 904 | 937 | 941 |
| | seal layer | | 941 | 950 | 942 | 942 | 942 | 942 | 941 |
| MFR (g/10 min) | laminate layer | | 1.8 | 1.8 | 3.8 | 1.8 | 1.2 | 2.3 | 4.0 |
| | core layer | | 1.8 | 1.8 | 3.8 | 1.8 | 1.2 | 2.3 | 4.0 |
| | seal layer | | 4.0 | 1.1 | 3.0 | 3.0 | 3.0 | 3.0 | 4.0 |
| bag breakage by dropping | [number] | | 26 | 18 | 33 | 50 | 30 | 3 | 2 |
| heat resistance fusion | sensory test | 115°C | Good | Good | Good | Good | N.G. | Good | Good |
| | | 120°C | Good | Good | Good | Good | N.G. | Good | Good |

Hereinafter, the second invention of the present application will be specifically explained with reference to Examples/Comparative Examples concerning the second invention of the present application. The second invention of the present application is not limited by any means by the following examples.

The evaluations of physical properties and characteristics in the Examples/Comparative Examples related to the second invention of the present application were conducted by the following methods.

### (1) Processable temperature range

A laminate film was made by laminating laminate layer (2C) of the sealant film of each example/comparison example onto a substrate (a nylon film of 15µm thickness).

The sides of seal layer (2A) of a pair of the above laminate films were overlapped and heat-sealed at three edges to make a three-side sealed bag.

After deaeration was carried out so that the inner faces of the three-side sealed bag were in contact with each other, the remaining one edge of the three-side sealed bag was heat sealed and retort-treated at a predetermined temperature selected within the range of from 115°C to 121°C for 45 minutes.

The presence or absence fusion inside the three-side sealed bag and the degree thereof were evaluated by sensory test based on the following criteria. A score of 4 or higher was judged as acceptable (Good), and the temperature range in which acceptable (Good) was achieved was defined as the processable temperature range.
5: No fusion
4: Very light fusion and easily peelable
3: Partially fused and peelable
2: Entirely fused and difficult to peel off
1: Fusion occurs at a level where peeling is impossible.

### (2) Low-temperature impact resistance (bag breakage by dropping)

The measurements were made in the same manner as described above for the Examples/Comparative Examples/Reference Examples related to the first invention of the present application. However, the terms "laminate layer (1C)" and "seal layer (1A)" shall be read as "laminate layer (2C)" and "seal layer (2A)," respectively.

### (3) Melting point

The measurements were made in the same manner as described above for the Examples/Comparative Examples/Reference Examples related to the first invention of the preset application.

### (4) Melting rate at 121°C

The heat of melting (J/g) was measured with a differential scanning calorimeter (DSC) (TA Instruments, "Q200", software: "TA Universal Analysis") at the temperature elevation rate of 10°C/min, and the heat of melting was defined as the heat of melting inherent to the raw materials. The ratio of the heat of melting from the melting start temperature to 121°C divided by the heat of melting inherent to the raw materials was defined as the melting rate [%] at 121°C.

Details of each component, such as resins, used in the Examples/Comparative Examples related to the second invention of the present application are as follows.
(LLDPE-b1)
   Metallocene LLDPE (linear low-density polyethylene)
   Composition: Ethylene-C6 copolymer
   Melting point: 130°C
   Density: 937 kg/m³
   Melting rate (121°C): 50 mass%.
   MFR (2.16 kg, 190°C): 1.8 g/10 min
(LLDPE-b2)
   Metallocene LLDPE (linear low-density polyethylene)
   Composition: Ethylene-C6 copolymer
   Melting point: 129°C
   Density: 938 kg/m³
   Melting rate (121°C): 39 mass%.
   MFR (2.16 kg, 190°C): 3.8 g/10 min
(LLDPE-b3)
   Non-metallocene LLDPE (linear low-density polyethylene)
   Composition: Ethylene-alpha olefin copolymer
   Melting point: 127°C
   Density: 941 kg/m³
   Melting rate (121°C): 28 mass%.
   MFR (2.16 kg, 190°C): 4.0 g/10 min
(LLDPE-b4)
   Metallocene LLDPE (linear low-density polyethylene)
   Composition: Ethylene-C6 copolymer
   Melting point: 94°C
   Density: 904 kg/m³
   Melting rate (121°C): 98 mass%.
   MFR (2.16 kg, 190°C): 1.2 g/10 min
(LLDPE-b5)
   Metallocene LLDPE (linear low-density polyethylene)
   Composition: Ethylene-alpha olefin copolymer
   Melting point: 130°C
   Density: 946 kg/m³
   Melting rate (121°C): 9 mass%.
   MFR (2.16 kg, 190°C): 2.8 g/10 min
(HDPE-b1)
   HDPE (high-density polyethylene)
   Composition: Ethylene copolymer
   Melting point: 131°C
   Density: 949 kg/m³
   Melting rate (121°C): 22 mass%.
   MFR (2.16 kg, 190°C): 1.1 g/10 min
(Anti-blocking agent master batch b)
   (Product name: EAZ-30, manufactured by Prime Polymer Co.)
   Composition in which 30 mass% of synthetic zeolite as anti-blocking agent and 70 mass% of low density polyethylene as base resin are formulated
(Slipping agent master batch b)
   (Product name: ESQ-4, manufactured by Prime Polymer Co.)
   Composition in which 4% by mass of erucamide as a slipping agent and 96 mass% of low density polyethylene as a base resin are formulated

### (Example b1)

The resins for each layer listed in Table 2 were fed to separate extruders, and the T-die method was used to form a sealant film for retort food packaging containers, which is a laminate film having the total thickness of 50 µm consisting of a three-layer co-extruded film of seal layer (2 A), core layer (2B), and laminate layer (2C) with the thickness ratio of 15:65:20, was formed.

In addition to the resins for each layer listed in Table 2, 6 mass% of anti-blocking agent masterbatch and 1.5 mass% of slipping agent masterbatch b, were added to seal layer (2A), and 1 mass% of anti-blocking agent masterbatch b was added to laminate layer (2C).

The resulting sealant film for retort food packaging containers was evaluated for processable temperature range, low-temperature impact resistance (bag breakage by dropping), and impact strength according to the methods described above.

The results are shown in Table 2.

### (Examples b2 to b5 and Comparative Examples b1 to b2)

Sealant films for retort food packaging containers were prepared and evaluated in the same manner as in Example b1, except that the resin for each layer was changed as described in Table 2, respectively.

The results are shown in Table 2.

### [Table 2]

**Table 2**

| | | | Example b1 | Example b2 | Example b3 | Example b4 | Example b5 | Comparative Example b1 | Comparative Exampleb2 |
|---|---|---|---|---|---|---|---|---|---|
| film thickness | | | 50 *µ* m | 50 *µ* m | 50 *µ* m | 50 *µ* m | 50 *µ* m | 50 *µ* m | 50 *µ* m |
| resin for each layer | laminate layer | | LLDPE-b1 | LLDPE-b1 | LLDPE-b2 | LLDPE-b1 | LLDPE-b1 | LLDPE-b4 | LLDPE-b3 |
| | core layer | | LLDPE-b1 | LLDPE-b1 | LLDPE-b2 | LLDPE-b1 | LLDPE-b1 | LLDPE-b4 | LLDPE-b3 |
| | seal layer | | LLDPE-b3 | HDPE-b1 | LLDPE-b5 | LLDPE-b5 | LLDPE-b2 | LLDPE-b5 | LLDPE-b3 |
| melting point (°C) | laminate layer | | 130 | 130 | 129 | 130 | 130 | 94 | 127 |
| | core layer | | 130 | 130 | 129 | 130 | 130 | 94 | 127 |
| | seal layer | | 127 | 131 | 130 | 130 | 129 | 130 | 127 |
| density (kg/m³) | laminate layer | | 936 | 936 | 938 | 936 | 936 | 904 | 941 |
| | core layer | | 936 | 936 | 938 | 936 | 936 | 904 | 941 |
| | seal layer | | 941 | 950 | 942 | 942 | 938 | 942 | 941 |
| melting rate at 121°C (mass %) | laminate layer | | 50% | 50% | 39% | 50% | 50% | 98% | 28% |
| | core layer | | 50% | 50% | 39% | 50% | 50% | 98% | 28% |
| | seal layer | | 28% | 22% | 9% | 9% | 39% | 9% | 28% |
| MFR (g/10 min) | laminate layer | | 1.8 | 1.8 | 3.8 | 1.8 | 1.8 | 1.2 | 4.0 |
| | core layer | | 1.8 | 1.8 | 3.8 | 1.8 | 1.8 | 1.2 | 4.0 |
| | seal layer | | 4.0 | 1.1 | 3.0 | 3.0 | 3.8 | 3.0 | 4.0 |
| bag breakage by droppinng | [number] | | 26 | 18 | 33 | 50 | 30 | 30 | 2 |
| processable temperature | sensory test | 115°C | Good | Good | Good | Good | Good | N.G. | Good |
| | | 117°C | Good | Good | Good | Good | Good | N.G. | Good |
| | | 120°C | Good | Good | Good | Good | N.G. | N.G. | Good |
| | | 121 °C | Good | Good | N.G. | N.G. | N.G. | N.G. | Good |

### INDUSTRIAL APPLICABILITY

The sealant film for retort food packaging containers of the first invention of the present application has both heat resistance at retort temperatures and impact resistance at low temperatures at high levels that exceed the limits of the conventional technology, and can provide retort food packaging containers that can be suitably used not only for storage at room temperature but also for low temperature distribution (frozen or chilled), and thus has high applicability in a variety of industries, such as food processing, distribution, food services, tourism, healthcare, and so on.

The sealant film for retort pouch containers of the second invention of the present application has both a wide processable temperature range and impact resistance at low temperatures at high levels beyond the limits of the conventional technology, and can provide retort food packaging containers that can be used not only for storage at room temperature but also for low temperature distribution (frozen or chilled), and thus has high applicability in a wide variety of industries, such as food processing, distribution, food services, tourism, health care, and so on.

## Claims

1. A sealant film for retort food packaging containers having (1A) seal layer, (1B) core layer, and (1C) laminate layer, each comprising a linear polyethylene, wherein
the density of (1A) seal layer is 915 kg/m³ or higher and 960 kg/m³ or lower;
the densities of (1B) core layer and (1C) laminate layer are both 932 kg/m³ or higher and lower than 940 kg/m³; and
the linear polyethylenes constituting (1B) core layer and (1C) laminate layer are both polymerized using a metallocene catalyst.

2. The sealant film for retort food packaging containers according to claim 1, wherein the melt flow rate (190°C, 2160g load) of (1B) core layer and (1C) laminate layer are both 6.0 g/10 min or less.

3. The Sealant film for retort food packaging containers according to claim 1 or 2, wherein the density of (1A) seal layer is 940 kg/m³ or higher and 953 kg/m³ or lower.

4. A film for retort food packaging containers, comprising the sealant film for retort food packaging containers according to any one of claims 1 to 3 and a base film, wherein the base film is laminated with the sealant film for retort food packaging containers at (1C) laminate layer.

5. A retort food packaging container comprising the film for retort food packaging containers according to claim 4.

6. A sealant film for retort food packaging containers having (2A) seal layer, (2B) core layer, and (2C) laminate layer, each comprising a linear polyethylene, wherein
(2B) core layer and (2C) laminate layer each have a thermal melting rate at 121°C of 30 to 95 mass%, and
(2A) seal layer has a thermal melting rate at 121°C of 5 to 50 mass%.

7. The sealant film for retort food packaging containers according to claim 6, wherein the thermal melting rate at 121°C of (2A) seal layer is 5 to 35 mass%.

8. The sealant film for retort food packaging containers according to claim 6 or 7, wherein the linear polyethylenes constituting (2B) core layer and (2C) laminate layer are both polymerized using a metallocene catalyst.

9. A film for retort food packaging containers, comprising the sealant film for retort food packaging containers according to any one of claims 6 to 8 and a base film, wherein the base film is laminated with the sealant film for retort food packaging containers at (2C) laminate layer.

10. A retort food packaging container comprising the film for retort food packaging containers according to claim 9.
